# EUROPEAN PATENT SPECIFICATION

(11) **EP 3 905 111 B1**
(45) Date of publication and mention of the grant of the patent: **22.10.2025**
(21) Application number: 20758780.9
(22) Date of filing: 12.02.2020
(51) Int. Cl.: G06V 40/13, G06V 40/12

(54) **SCREEN ASSEMBLY AND ELECTRONIC DEVICE**
BILDSCHIRMANORDNUNG UND ELEKTRONISCHE VORRICHTUNG
ENSEMBLE ÉCRAN ET DISPOSITIF ÉLECTRONIQUE

(30) Priority: 20.02.2019 CN 201910127499
(43) Date of publication of application: 03.11.2021
(73) Proprietor: Huawei Technologies Co., Ltd., Longgang District, Shenzhen, Guangdong 518129 (CN)
(72) Inventor: LIN, Jiao, Shenzhen, Guangdong 518129 (CN); CAI, Qi, Shenzhen, Guangdong 518129 (CN); PENG, Xu, Shenzhen, Guangdong 518129 (CN)
(74) Representative: Isarpatent
(86) International application number: PCT/CN2020/074830
(87) International publication number: WO 2020/168953

(56) References cited:
- EP-A1- 3 382 586
- WO-A1-2017/062506
- WO-A1-2018/093798
- WO-A1-2018/218980
- WO-A2-01/69520
- CN-A- 103 942 537
- CN-A- 104 978 557
- CN-A- 106 773 273
- CN-A- 107 247 925
- CN-A- 107 451 518
- CN-U- 209 543 378
- US-A1- 2017 270 342
- US-A1- 2018 012 069
- US-A1- 2018 040 675
- US-A1- 2018 158 877

## Description

Priority is claimed to Chinese Patent Application No. 201910127499.5, filed with the China National Intellectual Property Administration, February 20, 2019 and entitled "SCREEN ASSEMBLY AND ELECTRONIC DEVICE".

### TECHNICAL FIELD

This disclosure relate to the field of electronic product technologies, and the invention in particular, relates to a screen assembly and an electronic device.

### BACKGROUND

Currently, a smartphone is usually equipped with an image sensor used to implement fingerprint recognition. Costs of the image sensor are related to an area of a photosensitive surface of the image sensor. A larger area indicates higher costs. Consequently, costs of a smartphone having a large-screen fingerprint recognition function are extremely high.

WO 2018218980 A1 discloses a texture detection method for avoiding overlapping of plurality of images formed on a photosensitive sensing layer while reducing pixel density of the photosensitive sensing layer. Documents
US 2018/040675 A1 (ZENG YANG [CN] ET AL) 8 February 2018
US 2017/270342 A1 (HE YI [US] ET AL) 21 September 2017
WO 01/69520 A2 (ETHENTICA INC [US]) 20 September 2001
WO 2018/093798 A1 (BIDIRECTIONAL DISPLAY INC [US]) 24 May 2018
US 2018/158877 A1 (ZENG YANG [CN] ET AL) 7 June 2018
US 2018/012069 A1 (CHUNG DAE-YOUNG [KR] ET AL) 11 January 2018
EP 3 382 586 A1 (SAMSUNG DISPLAY CO LTD [KR]) 3 October 2018
WO 2017/062506 A1 (SYNAPTICS INC [US]) 13 April 2017 (2017-04-13)
disclose fingerprint sensors with separate recognition and non-recognition areas, formed with the use of lenses, collimators, pinholes, filters, and shielding layers.

### SUMMARY

The object of the present invention is to provide a screen assembly and an electronic device, to implement large-area fingerprint recognition with relatively low costs. This object is solved by the independent claim and further embodiments and improvements of the present invention are listed in the dependent claims. Hereinafter, in the disclosure up to the "brief description of the drawings", "according to the invention" will be used to indicate features/streps of the independent claims and "according to an embodiment" or "embodiment" will be used to indicate embodiments of the invention. Whenever an "implementation", "optional", "optionally" or similar is referred to, this designates features of embodiments of the invention, and "aspect of the invention" relates to the broadest embodiment as claimed in the independent claims.

According to a first aspect according to the invention, the invention provides a screen assembly. The screen assembly is applied to an electronic device. The screen assembly includes a display panel and a recognition panel located on a non-light-emitting side of the display panel. The recognition panel and the display panel are disposed in a stacked manner. The display panel is configured to display an image. Two sides of the display panel are respectively a light-emitting side and the non-light-emitting side. The light-emitting side is a side on which the display panel emits a display light.

The display panel includes a plurality of recognition regions. A non-recognition region is formed between two adjacent and mutually spaced recognition regions. The recognition panel includes a plurality of image sensors. Photosensitive surfaces of the plurality of image sensors are configured to capture, in a one-to-one correspondence, user fingerprint images located in the plurality of recognition regions. Here, the photosensitive surfaces of the plurality of image sensors face the plurality of recognition regions in a one-to-one correspondence The photosensitive surface of the image sensor can convert a light image formed on the photosensitive surface into an electrical signal in proportion to the light image. A ratio of a total area of all the recognition regions to a total area of all the non-recognition regions in a fingerprint coverage region is greater than or equal to 1:5.

According to the invention, the recognition panel including the plurality of image sensors is located on the non-light-emitting side of the display panel. Therefore, the plurality of image sensors can capture an in-screen fingerprint image, and the plurality of image sensors do not need to occupy surrounding space of the display panel, and an area of the display panel is increased. This facilitates narrow bezelization of the screen assembly. In this way, a screen-to-body ratio of the screen assembly is relatively large, and a screen-to-body ratio of the electronic device to which the screen assembly is applied is relatively large.

According to the invention, the photosensitive surfaces of the plurality of image sensors capture, in a one-to-one correspondence, some user fingerprint images located on a light-emitting side of the plurality of recognition regions, but do not capture any fingerprint images located on a light-emitting side of the non-recognition region. Therefore, the photosensitive surfaces of the plurality of image sensors perform partial capturing, instead of full capturing, on user fingerprint images located on the light-emitting side of the display panel, so that a total area of the photosensitive surfaces of the plurality of image sensors is reduced, and costs of the recognition panel and the screen assembly are reduced.

In addition, the ratio of the total area of all the recognition regions to the total area of all the non-recognition regions in the fingerprint coverage region is greater than or equal to 1:5. Therefore, a total area (namely, an effective capture area) of partial fingerprint images captured by the photosensitive surfaces of the plurality of image sensors can meet a minimum capture area required in a fingerprint recognition process, so that when the screen assembly can meet a basic recognition requirement, the total area of the photosensitive surfaces of the plurality of image sensors is reduced, to reduce costs of the plurality of image sensors and the costs of the screen assembly. Because the screen assembly can meet the recognition requirement with relatively low costs, the screen assembly can implement large-area fingerprint recognition (full-screen fingerprint recognition or large-screen fingerprint recognition) without a significant increase of the costs. In other words, the screen assembly and the electronic device to which the screen assembly is applied can implement the large-area fingerprint recognition with relatively low costs.

In an optional embodiment, the ratio of the total area of all the recognition regions to the total area of all the non-recognition regions in the fingerprint coverage region falls within a range of 1:2 to 2:1. In this application, a range of "A" to "B" includes an endpoint A and an endpoint B.

An upper limit of the ratio of the total area of all the recognition regions to the total area of all the non-recognition regions in the fingerprint coverage region is not strictly limited in this application. A larger ratio indicates higher recognition precision. A lower ratio indicates lower costs. It is verified through an experiment that when the ratio of the total area of all the recognition regions to the total area of all the non-recognition regions falls within the range of 1:2 to 2:1, the screen assembly can well meet requirements of recognition precision and costs.

In an embodiment, not claimed, the screen assembly can implement a full-screen fingerprint recognition. In this case, the fingerprint coverage region may be located at any location of a display region of the display panel. In other words, the entire display region of the display panel may respond to an operation of a user, to form a corresponding fingerprint coverage region. In another embodiment, the screen assembly can implement the large-screen fingerprint recognition. The fingerprint coverage region may be located in a specified range of the display region of the display panel. For example, a part of the display region of the display panel is a specified location, and this part of region may respond to the operation of the user to form the corresponding fingerprint coverage region. An area of the specified range is relatively large. For example, the specified range may be a half or more upper or lower screen of the screen assembly, or may be a half or more left or right screen of the screen assembly.

Optionally, although not claimed, the fingerprint coverage region responds to the operation of the user. In other words, a location of the fingerprint coverage region is user-defined. In an embodiment, the screen assembly may sense a touch region of the user. The touch region forms the fingerprint coverage region. In this case, a shape of the fingerprint coverage region changes with a shape of the touch region of the user.

The screen assembly senses a touch location of the user, and starts a preset fingerprint coverage region corresponding to the touch location. The fingerprint coverage region covers the touch location. In this case, the shape of the fingerprint coverage region may be a circle, an ellipse, a square, a runway, or the like. The shape of the fingerprint coverage region may alternatively be similar to or the same as a shape of a finger of the user. The shape of the fingerprint coverage region may alternatively be user-defined. A specific shape of the fingerprint coverage region is not strictly limited in this embodiment of this application.

An area of the fingerprint coverage region ranges from 35 square millimeters to 200 square millimeters. For example, the area of the fingerprint coverage region may range from 64 square millimeters to 144 square millimeters.

In this embodiment, not claimed, the fingerprint coverage region includes at least two of the recognition regions. In this case, an area of each recognition region is relatively small. Images captured by photosensitive surfaces, of the image sensors, that are corresponding to the at least two recognition regions are spliced into a final comparison image. Because the comparison image is spliced from a plurality of images, the comparison image is relatively precise. This helps improve fingerprint recognition accuracy of the electronic device to which the screen assembly is applied.

It may be understood that, on a premise that the fingerprint coverage region meets a basic capture area, a smaller area of each recognition region indicates that the comparison image is spliced from a larger quantity of images, and image quality of the comparison image and the fingerprint recognition accuracy are higher. However, a larger quantity of image sensors also means higher costs. When the area of each recognition region is larger, a smaller quantity of image sensors can reduce costs, but a quantity of spliced images included in the comparison image is reduced, and the image quality of the comparison image and the fingerprint recognition accuracy are reduced. Therefore, in this embodiment of this application, when an area of a single recognition region is designed, the requirements of recognition accuracy and costs need to be considered.

The photosensitive surface of each image sensor includes a plurality of sensor units arranged in an array. The sensor units may be complementary metal oxide semiconductor (complementary metal oxide semiconductor, CMOS) sensors or thin-film transistor (thin film transistor, TFT) sensors. When the sensor units are complementary metal oxide semiconductor sensors, a substrate of the image sensor is made of a semiconductor material. When the sensor units are thin-film transistor sensors, the substrate of the image sensor is made of an insulation material such as glass or an organic medium.

In this embodiment, not claimed, shapes and areas of the recognition regions may be the same or different. This application is described by using an example in which the shapes and the areas of the recognition regions are the same.

In this embodiment, not claimed, when a ratio of an area of the recognition region to an area of the non-recognition region meets the foregoing condition, arrangement of the plurality of recognition regions may be regular or random. In this embodiment of this application, an example in which the arrangement of the plurality of recognition regions may be regular is used for description.

In an optional embodiment, the plurality of recognition regions are arranged in a mutually spaced manner in a first direction. To be specific, in the first direction, the non-recognition region is arranged between any two adjacent recognition regions of the recognition regions. In this case, in the first direction, a distance between any two adjacent recognition regions of the recognition regions has a first size, and a length of each recognition region has a second size. The first size may be greater than, equal to, or less than the second size. A size relationship between the first size and the second size is not strictly limited in this embodiment of this application.

In this embodiment, the plurality of recognition regions are arranged in the mutually spaced manner in the first direction. Therefore, when two of the fingerprint coverage regions are located at different locations on the display panel, quantities, of photosensitive surfaces that are of the image sensors and that are corresponding to the two fingerprint coverage regions, are the same or similar, to ensure that the screen assembly can obtain a sufficient effective capture area in different scenarios. In this way, the fingerprint recognition accuracy of the electronic device is high.

In an optional embodiment, the plurality of recognition regions are arranged in a mutually spaced manner in a second direction. The second direction is perpendicular to the first direction. To be specific, in the second direction, the non-recognition region is arranged between any two adjacent recognition regions of the recognition regions. In this case, in the second direction, a distance between any two adjacent recognition regions of the recognition regions has a third size, and a length of each recognition region has a fourth size. The third size may be greater than, equal to, or less than the fourth size. A size relationship between the first size and the second size is not strictly limited in this embodiment of this application.

In this embodiment, when the plurality of recognition regions are arranged in the mutually spaced manners in the first direction and the second direction, the quantities, of photosensitive surfaces that are of the image sensors and that are corresponding to the two fingerprint coverage regions located at different locations on the display panel, are the same or more similar. This further ensures that the screen assembly can obtain the sufficient effective capture area in different scenarios, so that the fingerprint recognition accuracy of the electronic device is higher.

An arrangement manner of the plurality of recognition regions in the first direction is the same as an arrangement manner of the plurality of recognition regions in the second direction. In this case, reliability of obtaining the sufficient effective capture area by the screen assembly in different scenarios is higher, and the fingerprint recognition accuracy of the electronic device is higher. Certainly, in another embodiment, the arrangement manner of the plurality of recognition regions in the first direction may be different from the arrangement manner of the plurality of recognition regions in the second direction.

In an optional embodiment, the plurality of recognition regions are arranged in rows and mutually spaced in the first direction, and are arranged in columns and mutually spaced in the second direction. The second direction is perpendicular to the first direction. All the recognition regions in two adjacent rows of the recognition regions are arranged in different columns. In this case, all the recognition regions in two adjacent columns of the recognition regions are arranged in different columns.

In an embodiment, not claimed, quantities of recognition regions included in any two fingerprint coverage regions at different locations of the screen assembly are similar. To be specific, quantities of photosensitive surfaces, corresponding to the two fingerprint coverage regions, of the image sensors are similar. Therefore, the screen assembly can obtain the sufficient effective capture area in different scenarios, so that the fingerprint recognition accuracy of the electronic device is higher.

In an optional embodiment, the ratio of the total area of all the recognition regions to the total area of all the non-recognition regions in the fingerprint coverage region falls within a range of 1:0.8 to 1:1.2. In this case, in the first direction, a spacing between two adjacent recognition regions of the recognition regions may be equal to, slightly greater than, or slightly less than the length of the recognition region. In the second direction, a spacing between two adjacent recognition regions of the recognition regions may also be equal to, slightly greater than, or slightly less than the length of the recognition region.

In this embodiment, requirements of manufacturing tolerance, assembly tolerance, total image capture area, costs, and the like can be comprehensively considered for the screen assembly, to obtain a higher product yield, higher fingerprint recognition accuracy, and lower costs.

In an optional embodiment, the plurality of recognition regions include a plurality of recognition region groups. Each recognition region group includes at least two recognition regions, of the recognition regions, that are next to each other. Any two adjacent recognition region groups of the recognition region groups are arranged in a mutually spaced manner. That at least two of the recognition regions are next to each other means that a spacing between two adjacent recognition regions of the recognition regions in a same recognition region group is far less than a spacing between two adjacent recognition region groups. The non-recognition region is formed between any two adjacent recognition region groups of the recognition region groups. The plurality of recognition region groups are arranged in a mutually spaced manner in the first direction, and are arranged in a mutually spaced or consecutive manner in the second direction. The second direction is perpendicular to the first direction.

In this embodiment, because each recognition region group includes the at least two recognition regions that are of the recognition regions and that are next to each other, and any two adjacent recognition region groups of the recognition region groups are arranged in the mutually spaced manner, an arrangement manner of the recognition regions is more diversified. This helps meet respective fingerprint recognition requirements of different electronic devices. In addition, because each recognition region group includes the at least two recognition regions, the recognition regions can capture a continuous image in a small region, and the final comparison image created by the screen assembly is spliced from at least two continuous images. The final comparison image is easier to be compared with a standard image in the electronic device. Therefore, the fingerprint recognition accuracy of the electronic device is higher.

The fingerprint coverage region includes at least two of the recognition region groups. In this case, the final comparison image created by the screen assembly is spliced from images captured by the at least two of the recognition region groups, and image quality is relatively high, so that the fingerprint recognition accuracy of the electronic device to which the screen assembly is applied is relatively high.

In an optional embodiment, a single image sensor includes one photosensitive surface. In this case, an overall size of the image sensor changes with an area of the photosensitive surface of the image sensor, and the area of the photosensitive surface is designed to be relatively small, so that the overall size of the image sensor is relatively small. This helps reduce costs of the image sensor.

In another optional embodiment, a single image sensor includes a plurality of photosensitive surfaces. When an area of a single photosensitive surface is small, a plurality of photosensitive surfaces may be integrated into a same image sensor, to make a cutting process of the image sensor easier. In this way, requirements of a small size and easy processing of the image sensor are met.

The plurality of photosensitive surfaces of the same image sensor may be disposed in a mutually spaced manner, or may be disposed next to each other.

According to the invention, the recognition panel further includes a substrate and an optical layer. The substrate is located on the non-light-emitting side of the display panel. The plurality of image sensors are fastened to a side, facing the display panel, of the substrate. The photosensitive surfaces of the image sensors are disposed away from the substrate, that is, disposed facing the display panel. The optical layer is located between the plurality of image sensors and the display panel. The optical layer is configured to image a user fingerprint image on the light-emitting side of the recognition region to the photosensitive surface of the corresponding image sensor. The screen assembly processes, by using the optical layer, light reflected by a user fingerprint, to form a corresponding captured image on the photosensitive surface of the corresponding image sensor. The captured image is corresponding to the user fingerprint image.

According to the invention, the optical layer is disposed in the screen assembly, and the optical layer can change a light state. Therefore, a relative location relationship between the photosensitive surfaces of the image sensors and the display panel can be changed by setting a structure and a size of the optical layer, so that a structure of the screen assembly is more diversified, and the screen assembly has a wider application scope.

In the first aspect according to the invention, the photosensitive surfaces of the plurality of image sensors face the plurality of recognition regions in a one-to-one correspondence. In this case, the optical layer makes a minor change to a propagation direction of the light, so that a risk of insufficient precision of the final comparison image caused by a distortion of the light in a propagation process can be reduced, and the fingerprint recognition accuracy of the electronic device to which the screen assembly is applied is relatively high.

In another implementation, not claimed, the optical layer may change the propagation direction of the light. Therefore, a relative location relationship between the photosensitive surfaces of the plurality of image sensors may be slightly different from a relative location relationship between the plurality of recognition regions.

For example, the single image sensor includes a plurality of photosensitive surfaces, and the plurality of photosensitive surfaces are next to each other. The plurality of recognition regions corresponding to the plurality of photosensitive surfaces are disposed in a mutually spaced manner. The propagation direction of the light is changed by the optical layer, so that light entering these recognition regions is converged and emitted into the plurality of photosensitive surfaces that are next to each other, to implement image capturing.

In an embodiment, not claimed, the substrate may be a rigid printed circuit board (printed circuit board, PCB). In another embodiment, not claimed, the substrate may include a flexible printed circuit (flexible printed circuit, FPC) and a reinforcement board. The reinforcement board and the flexible printed circuit are disposed in a stacked manner.

In an embodiment, not claimed, the plurality of image sensors may be directly bonded (bonding) to the substrate in a die attach (die attach) manner. In another embodiment, the plurality of image sensors may be connected to form an integrated package structure by using a fan-out (fan-out) process, and then the package structure is entirely attached to the substrate.

In an optional embodiment, the recognition panel further includes a package. The package may be located on the side, facing the display panel, of the substrate, and may be disposed around the plurality of image sensors. In this case, the plurality of image sensors are packaged into the integrated package structure by using the package. The fan-out process may be used when the plurality of image sensors are packaged by using the package. The optical layer covers the package and the plurality of image sensors. In this case, the optical layer may be an integrated structure.

In this embodiment, the plurality of image sensors can first be packaged into the integrated package structure by using the package. Then, the package structure is attached to the substrate. Next, the optical layer that is also an integrated structure is covered on the package and the plurality of image sensors. In this way, few assembly process steps and low process difficulty of the screen assembly help reduce production costs of the screen assembly.

In an optional embodiment, the optical layer includes a plurality of optical parts. The plurality of optical parts are located on the plurality of image sensors in a one-to-one correspondence. The optical parts are located on an image capturing side of the corresponding image sensors, that is, located above the photosensitive surfaces of the image sensors. The recognition panel further includes a plurality of package bodies. The plurality of package bodies are disposed with the plurality of optical parts in a one-to-one correspondence. Each package body is configured to package the corresponding optical part and the corresponding image sensor into an integrated unit assembly.

The recognition panel may further include a package. The package may be located on the side, facing the display panel, of the substrate, and may be disposed around the plurality of image sensors and the plurality of optical parts. In an embodiment, not claimed, the image sensor and the optical part located above the image sensor may first form the unit assembly. After a plurality of unit assemblies are fastened to the substrate, the plurality of unit assemblies and the substrate are packaged into an integrated structure by using the package. In another embodiment, not claimed, the image sensor and the optical part located above the image sensor may first form the unit assembly. After a plurality of unit assemblies are packaged into an integrated structure by using the package, the structure is attached to the substrate, to complete assembly.

In this embodiment, not claimed, the corresponding optical part and the corresponding image sensor may form the unit assembly, and then a plurality of unit assemblies are fastened to the substrate based on a specific arrangement requirement. Therefore, the screen assembly may form, without changing a material type, different recognition panels by changing a location of the unit assemblies. This facilitates batching and multi-modeling of the screen assembly.

In an optional embodiment, the optical layer includes a plurality of collimators. The collimators are configured to convert divergent light into collimated light. The plurality of collimators are disposed facing the photosensitive surfaces of the plurality of image sensors in a one-to-one correspondence.

In this embodiment, not claimed, the plurality of collimators image a captured image with an object image ratio of 1:1 on the photosensitive surfaces of the image sensors. The plurality of collimators can collimate the light reflected by the user fingerprint, so that image quality of the captured image is relatively high, and the screen assembly can form a relatively high-quality comparison image. Therefore, the fingerprint recognition precision of the electronic device is relatively high.

Because the collimators are configured to image the captured image with the object image ratio of 1:1, an area of the photosensitive surface of the image sensor is similar to an area of the recognition region on the display panel. A tolerance of the plurality of image sensors during assembly is considered, so that a proper avoidance may be reserved between two, of the image sensors, that are close to each other, to improve assembly precision and a product yield of the screen assembly.

When the corresponding image sensor and the optical part first form the unit assembly and then are packaged by using the package, each collimator may be directly formed on the photosensitive surface of the image sensor by using a wafer level (wafer level) processing technology. For example, a collimation hole structure may be deposited or etched on the photosensitive surface of the image sensor by using a multi-layer mask (mask) process, to form the collimator. Alternatively, each collimator may be a thin film, having a collimation hole, that is formed first. Then, each collimator is attached to the photosensitive surface of the corresponding image sensor.

When the plurality of image sensors are first be packaged by using the package and then the optical layer is assembled, the optical layer may be an integrated structure including a plurality of collimators.

In an optional embodiment, the optical layer includes a plurality of light transmission holes. The optical layer may include a substrate and a light shielding film. The light shielding film is located on a side, facing the display panel, of the substrate. The substrate is made of a transparent material, for example, glass or polycarbonate (polycarbonate, PC). The plurality of light transmission holes are on the light shielding film. The light shielding film is made of a light shielding material. The plurality of light transmission holes are disposed facing the photosensitive surfaces of the plurality of image sensors in a one-to-one correspondence. A first spacing is formed between a center of each light transmission hole and a light-emitting surface of the display panel. A second spacing is formed between the center of each light transmission hole and the photosensitive surface of the image sensor. The first spacing is greater than the second spacing.

In this embodiment, according to a pinhole imaging principle, the plurality of light transmission holes image a captured image with an object image ratio X:1 on the photosensitive surface of the image sensor. X is greater than 1. In this case, an area of the captured image is less than the area of the recognition region on the display panel. Therefore, when the area of the recognition region remains unchanged, the area of the photosensitive surface of the image sensor can be reduced, to reduce costs of the image sensor and costs of the screen assembly. In addition, when the area of the photosensitive surface of the image sensor remains unchanged, the area of the recognition region corresponding to the image sensor increases, and redundant splicing may be used to splice the plurality of recognition regions, to improve the fingerprint recognition accuracy of the electronic device.

The screen assembly may reduce the area of the photosensitive surface of the image sensor, or increase the area of the recognition region corresponding to the photosensitive surface of the image sensor, by adjusting sizes of the first spacing and the second spacing.

The light-emitting surface of the display panel is a surface, away from the recognition panel, of the display panel. A non-light-emitting surface of the display panel is disposed opposite to the light-emitting surface of the display panel. A spacing is formed between the non-light-emitting surface of the display panel and the center of the light transmission hole. The size of the first spacing may be adjusted by adjusting a size of the spacing.

The substrate of the optical layer has a thickness (a size in a direction perpendicular to the photosensitive surface of the image sensor). A size of the second spacing may be adjusted by adjusting the thickness of the substrate.

In an optional embodiment, the screen assembly further includes a transparent bonding layer, and the bonding layer is bonded between the display panel and the optical layer. In an optional embodiment, not claimed, the bonding layer is filled between the display panel and the optical layer. The bonding layer may bond the optical layer to the display panel, and may also prevent light from affecting quality of the captured image due to scattering of the air layer. The bonding layer may be made of a transparent optical adhesive. In an embodiment, the bonding layer may also cover the package at the same time.

In an optional embodiment, the optical layer includes a plurality of lenses. The plurality of lenses are disposed facing the photosensitive surfaces of the plurality of image sensors in a one-to-one correspondence. The lenses are configured to image the user fingerprint images and scale down the user fingerprint images to the photosensitive surfaces of the image sensors. The lenses are configured for light concentration.

In this embodiment, the lenses are configured to image the user fingerprint images and scale down the user fingerprint images to the photosensitive surfaces of the image sensors. A ratio of the area of the captured image formed on the photosensitive surface of the image sensor to the area of the corresponding recognition region is less than 1. In other words, the object image ratio is greater than 1. In this case, the area of the captured image is less than the area of the recognition region on the display panel. Therefore, when the area of the recognition region remains unchanged, the area of the photosensitive surface of the image sensor can be reduced, to reduce the costs of the image sensor and the costs of the screen assembly. In addition, when the area of the photosensitive surface of the image sensor remains unchanged, the area of the recognition region corresponding to the photosensitive surface of the image sensor increases, and the redundant splicing may be used for splicing of the plurality of recognition regions, to improve the fingerprint recognition accuracy of the electronic device.

A single lens may include one or more sub-lenses. When the single lens includes one sub-lens, the sub-lens is a convex lens. When the single lens includes a plurality of sub-lenses, the plurality of sub-lenses may be a plurality of convex lenses, or a combination of a concave lens and a convex lens. The lenses may alternatively be planar lenses made by using a metamaterial structure.

According to a second aspect according to the invention, the invention further provides an electronic device. The electronic device includes a housing and the screen assembly according to any one of the foregoing descriptions. The screen assembly is mounted on the housing.

In an optional embodiment, not claimed, because the screen assembly has a larger display region, a screen-to-body ratio of the electronic device is relatively large. The screen assembly can reduce a total area of photosensitive surfaces of the plurality of image sensors when the screen assembly has a sufficient effective capture area, so that costs of the plurality of image sensors are reduced. Therefore, costs of the screen assembly are lower, and the electronic device can implement large-area fingerprint recognition with relatively low costs without significantly affecting fingerprint recognition performance.

### BRIEF DESCRIPTION OF DRAWINGS

FIG. 1 is a schematic structural diagram of an electronic device according to an embodiment of this application;
FIG. 2 is a schematic structural diagram of a screen assembly of an electronic device shown FIG. 1;
FIG. 3 is a schematic structural diagram of a structure of a screen assembly shown in FIG. 2 at an A-A line in an embodiment;
FIG. 4 is a schematic structural diagram of a structure of a screen assembly shown in FIG. 2 at an A-A line in another embodiment;
FIG. 5A is a partial schematic structural diagram of a display panel of a screen assembly shown in FIG. 2 in an implementation;
FIG. 5B is a schematic diagram of an arrangement manner of recognition regions and non-recognition regions of a display panel shown in FIG. 5A;
FIG. 5C is a schematic diagram of another arrangement manner of recognition regions and non-recognition regions of a display panel shown in FIG. 5A;
FIG. 5D is a schematic diagram of still another arrangement manner of recognition regions and non-recognition regions of a display panel shown in FIG. 5A;
FIG. 6A is a partial schematic structural diagram of a display panel of a screen assembly shown in FIG. 2 in another implementation;
FIG. 6B is a partial schematic structural diagram of a display panel of a screen assembly shown in FIG. 2 in still another implementation;
FIG. 6C is a partial schematic structural diagram of a display panel of a screen assembly shown in FIG. 2 in still another implementation;
FIG. 7 is a schematic structural diagram of a screen assembly shown in FIG. 3 in a first embodiment;
FIG. 8A is a schematic structural diagram of a screen assembly shown in FIG. 7 in a first implementation;
FIG. 8B is a schematic structural diagram of a screen assembly shown in FIG. 7 in a second implementation;
FIG. 8C is a schematic structural diagram of a screen assembly shown in FIG. 7 in a third implementation;
FIG. 9 is a schematic structural diagram of a screen assembly shown in FIG. 3 in a second embodiment;
FIG. 10A is a schematic structural diagram of a screen assembly shown in FIG. 9 in a first implementation;
FIG. 10B is a schematic structural diagram of a screen assembly shown in FIG. 9 in a second implementation; and
FIG. 10C is a schematic structural diagram of a screen assembly shown in FIG. 9 in a third implementation.

### DESCRIPTION OF EMBODIMENTS

The following describes the embodiments of this application with reference to the accompanying drawings in the embodiments of this application.

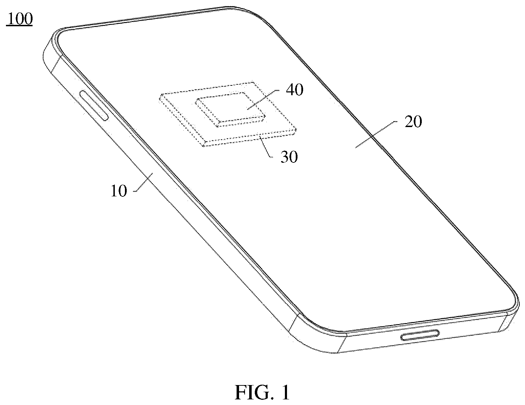

FIG. 1 is a schematic structural diagram of an electronic device 100 according to an embodiment of this application.

The electronic device 100 may be a device such as a mobile phone, a tablet computer, an electronic reader, a notebook computer, a vehicle-mounted device, or a wearable device. In the embodiment shown in FIG. 1, an example in which the electronic device 100 is the mobile phone is used for description.

The electronic device 100 includes a housing 10 and a screen assembly 20. The screen assembly 20 is mounted on the housing 10. Specifically, the housing 10 includes a frame and a rear cover. The frame surrounds a periphery of the rear cover. The screen assembly 20 is installed on a side, away from the rear cover, of the frame. In other words, the screen assembly 20 and the rear cover are separately installed on two sides of the frame. When a user uses the electronic device 100, the screen assembly 20 is usually placed toward the user, and the rear cover is placed away from the user. The frame and the rear cover may be assembled to form an integrated structure. The frame and the rear cover may alternatively be of an integral structure.

The screen assembly 20 is integrated with a display function, a touch sensing function, and a fingerprint image capturing function. The screen assembly 20 can capture a fingerprint image of the user, and form a corresponding comparison image.

The electronic device 100 further includes a circuit board 30 and a control module 40 located on the circuit board 30. The circuit board 30 and the control module 40 are accommodated inside the housing 10. The control module 40 may include at least one communications interface, a bus, at least one processor, and at least one memory. The at least one communications interface, the at least one processor, and the at least one memory may communicate with each other by using the bus. The at least one communications interface is configured to receive and send data. The screen assembly 20 is connected to one of the communications interfaces. The screen assembly 20 can transmit, to the processor, data of the comparison image corresponding to the fingerprint image of the user. The at least one memory is configured to store program code. The program code includes fingerprint recognition code. The at least one processor may be configured to execute the application program code. For example, the at least one processor can execute the fingerprint recognition code, to implement fingerprint recognition. In this application, "at least one" includes two cases: one or two.

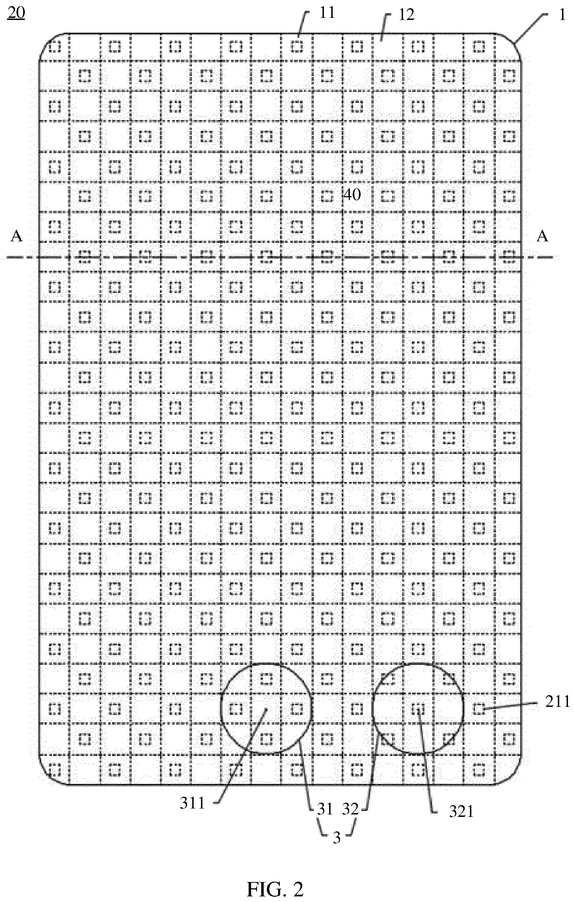

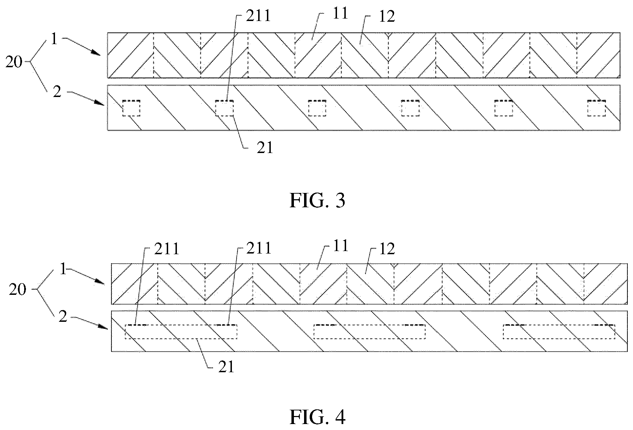

Refer to FIG. 2 and FIG. 3. FIG. 2 is a schematic structural diagram of the screen assembly 20 of the electronic device 100 shown in FIG. 1. FIG. 3 is a schematic structural diagram of a structure of the screen assembly 20 shown in FIG. 2 at an A-A line in an embodiment.

The screen assembly 20 includes a display panel 1 and a recognition panel 2 located on a non-light-emitting side of the display panel 1. The recognition panel 2 and the display panel 1 are disposed in a stacked manner. The display panel 1 is configured to display an image. Two sides of the display panel 1 are respectively a light-emitting side and the non-light-emitting side. The light-emitting side is a side on which the display panel 1 emits a display light.

The recognition panel 2 includes a plurality of image sensors 21. The display panel 1 includes a plurality of recognition regions 11. A non-recognition region 12 is formed between two adjacent and mutually spaced recognition regions 11. Photosensitive surfaces 211 of the plurality of image sensors 21 are configured to capture, in a one-to-one correspondence, a user fingerprint image located on the light-emitting side of the display panel 1. Specifically, the photosensitive surfaces 211 of the plurality of image sensors 21 are configured to capture, in a one-to-one correspondence, user fingerprint images located in the plurality of recognition regions 11. The image sensor 21 can convert a captured image (light image) formed on the photosensitive surface 211 of the image sensor 21 into an electrical signal in proportion to the captured image. A ratio of a total area of all recognition regions 11 to a total area of all non-recognition regions 12 in a fingerprint coverage region 3 is greater than or equal to 1:5.

In this embodiment, the recognition panel 2 including the plurality of image sensors 21 is located on the non-light-emitting side of the display panel 1. Therefore, the plurality of image sensors 21 can capture an in-screen fingerprint image, and the plurality of image sensors 21 do not need to occupy surrounding space of the display panel 1, so that an area of the display panel 1 is increased. This facilitates narrow bezelization of the screen assembly 20. In this way, a screen-to-body ratio of the screen assembly 20 is relatively large, and a screen-to-body ratio of the electronic device 100 to which the screen assembly 20 is applied is relatively large.

In this embodiment, the photosensitive surfaces 211 of the plurality of image sensors 21 capture, in a one-to-one correspondence, some user fingerprint images located on a light-emitting side of the plurality of recognition regions 11, but do not capture any fingerprint images located on a light-emitting side of the non-recognition region 12. Therefore, the photosensitive surfaces 211 of the plurality of image sensors 21 perform partial capturing, instead of full capturing, on the user fingerprint image located on the light-emitting side of the display panel 1, so that a total area of the photosensitive surfaces 211 of the plurality of image sensors 21 is reduced, and costs of the recognition panel 2 and the screen assembly 20 are reduced.

In addition, the ratio of the total area of all the recognition regions 11 to the total area of all the non-recognition regions 12 in the fingerprint coverage region 3 is greater than or equal to 1:5. Therefore, a total area (namely, an effective capture area) of partial fingerprint images captured by the photosensitive surfaces 211 of the plurality of image sensors 21 can meet a minimum capture area required in a fingerprint recognition process, so that when the screen assembly 20 meets a basic recognition requirement, the total area of photosensitive surfaces 211 of the plurality of image sensors 211 is reduced, to reduce costs of the plurality of image sensors 21 and production costs of the screen assembly 20. Because the screen assembly 20 can meet the recognition requirement with relatively low costs, the screen assembly 20 can implement large-area fingerprint recognition (full-screen fingerprint recognition or large-screen fingerprint recognition) without a significant increase of the costs. In other words, the screen assembly 20 and the electronic device 100 to which the screen assembly 20 is applied can implement the large-area fingerprint recognition with relatively low costs.

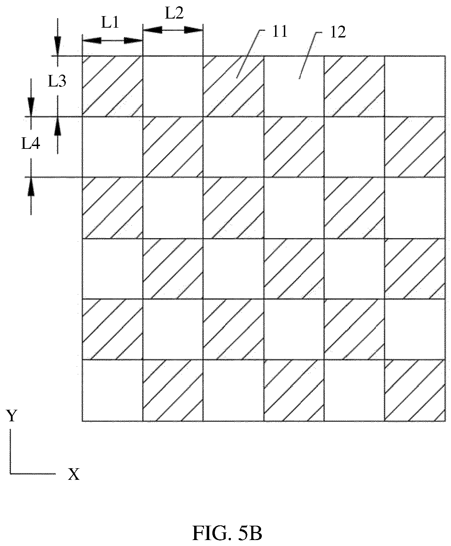

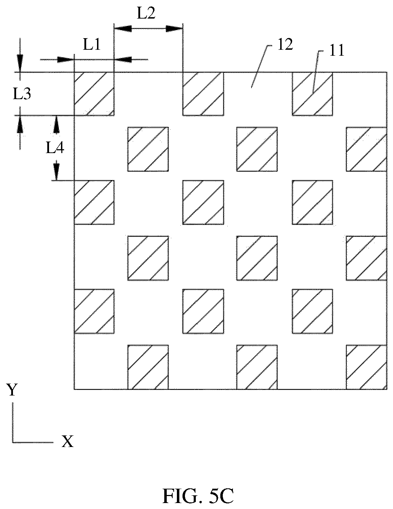

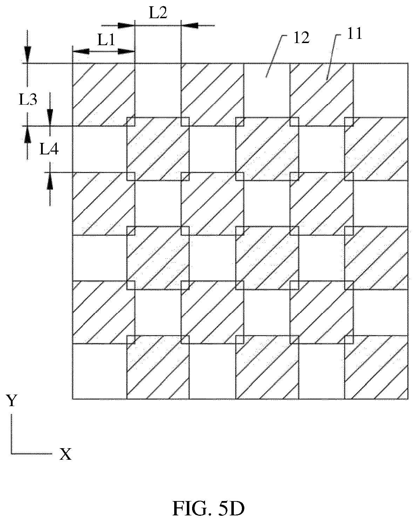

The fingerprint coverage region 3 includes an area within a range of an area contour. If half of an area of a recognition region 11 or another preset proportion (for example, all, two thirds, one third, three quarters, one quarter, or one fifth) of the area of the recognition region 11 is located within the area contour, the recognition region 11 is an area within the fingerprint coverage region 3. When there are a plurality of non-recognition regions 12 and the non-recognition regions 12 are separated by the recognition regions 11 (refer to FIG. 5B and FIG. 5D below), if half of an area of a non-recognition region 12 or another preset proportion of the area is located within the area contour, the non-recognition region 12 is an area within the fingerprint coverage region 3. When the non-recognition regions 12 are an integral area (refer to FIG. 5C below), a part, of the non-recognition regions 12, that is within the range of the area contour is an area within the fingerprint coverage region 3.

In an optional embodiment, the ratio of the total area of all the recognition regions 11 to the total area of all the non-recognition regions 12 in the fingerprint coverage region 3 falls within a range of 1:2 to 2:1. In this application, a range of "A" to "B" includes an endpoint A and an endpoint B.

An upper limit of the ratio of the total area of all the recognition regions 11 to the total area of all the non-recognition regions 12 in the fingerprint coverage region 3 is not strictly limited in this application. A larger ratio indicates higher recognition precision. A lower ratio indicates lower costs. In a design, both the recognition precision and the costs are required to be considered for the ratio. It is verified through an experiment that when the ratio of the total area of all the recognition regions 11 to the total area of all the non-recognition regions 12 in the fingerprint overage areas 3 falls within the range of 1:2 to 2:1, the screen assembly 20 can well meet requirements of recognition precision and costs.

In an embodiment, the screen assembly 20 can implement the full-screen fingerprint recognition. In this case, the fingerprint coverage region 3 may be located at any location of a display region of the display panel 1. In other words, the entire display region of the display panel 1 may respond to an operation of a user, to form a corresponding fingerprint coverage region 3. In another embodiment, the screen assembly 20 can implement the large-screen fingerprint recognition. The fingerprint coverage region 3 may be located in a specified range of the display region of the display panel 1. For example, a part of the display region of the display panel 1 is a specified location, and this part of region may respond to the operation of the user to form the corresponding fingerprint coverage region 3. An area of the specified range is relatively large. For example, the specified range may be a half or more upper or lower screen of the screen assembly, or may be a half or more left or right screen of the screen assembly.

Optionally, the fingerprint coverage region responds to the operation of the user. In other words, a location of the fingerprint coverage region is user-defined.

The screen assembly senses a touch region of the user. The touch region forms the fingerprint coverage region.

The screen assembly senses a touch location of the user, and starts a preset fingerprint coverage region corresponding to the touch location. The fingerprint coverage region covers the touch location. In this case, the shape of the fingerprint coverage region 3 may be a circle, an ellipse, a square, a runway, or the like. The shape of the fingerprint coverage region 3 may alternatively be similar to or the same as a shape of a finger of the user. The shape of the fingerprint coverage region 3 may alternatively be user-defined. A specific shape of the fingerprint coverage region 3 is not strictly limited in this embodiment of this application. An example in which the shape of the fingerprint coverage region 3 is a circle shown in FIG. 2 is used for illustration.

An embodiment of this application further discloses a fingerprint recognition method of the electronic device 100. The method may be applied to the electronic device 100 in this embodiment of this application. The method includes the following steps.

Step 1: The screen assembly 20 captures a touch location of a user, and forms touch information. First touch information includes location information of a finger of the user. For example, as shown in FIG. 2, when the finger of the user touches a first point 311, the first touch information includes location information (namely, coordinates) of the first point 311. When the finger of the user touches a second point 321, second touch information includes location information (namely, coordinates) of the second point 321. A touch layer in the screen assembly 20 may be configured to capture a touch action of the user, and form the touch information.

Step 2: A control module 40 starts, based on the touch information, a light source in a corresponding fingerprint coverage region 3. The corresponding fingerprint coverage region 3 is an area covered by a preset shape that uses a location of the finger of the user as a center or a basis point.

For example, as shown in FIG. 2, when the touch information includes a location of the first point 311, the corresponding fingerprint coverage region 3 is a first fingerprint coverage region 31. When the touch information includes a location of the second point 321, the corresponding fingerprint coverage region 3 is a second fingerprint coverage region 32. An example in which the image sensor 21 recognizes visible light is used for description. The light source of the corresponding fingerprint coverage region 3 may be the recognition region 11 and the non-recognition region 12 that are located in the fingerprint coverage region 3, or may be a light-emitting area that covers the fingerprint coverage region 3.

Step 3: The control module 40 starts, based on the touch information, photosensitive surfaces 211, of image sensors 21, that are corresponding to the fingerprint coverage region 3.

For example, as shown in FIG. 2, each image sensor 21 includes one photosensitive surface 211. Photosensitive surfaces 211, of image sensors 21, that are corresponding to the first fingerprint coverage region 31 are photosensitive surfaces 211 of four image sensors 21 configured to capture the first fingerprint coverage region 31 in FIG. 2. Photosensitive surfaces, of image sensors 21, that are corresponding to the second fingerprint coverage region 32 are photosensitive surfaces 211 of five image sensors 21 configured to capture the second fingerprint coverage region 32 in FIG. 2. A required photosensitive surface 211 is started, and an unwanted photosensitive surface 211 does not work, to reduce energy consumption.

Step 4: The control module 40 reads comparison image data of the photosensitive surface 211, of the image sensor 21, that is corresponding to the fingerprint coverage region 3. The comparison image data corresponds to a user fingerprint image. The control module 40 may simultaneously read data of photosensitive surfaces 211, of a plurality of image sensors 21, that are corresponding to the fingerprint coverage region 3; and the data of the photosensitive surfaces 211, of the plurality of image sensors 21, that are corresponding to the fingerprint coverage region 3 may also be successfully read.

Step 5: The control module 40 extracts feature information in the comparison image data and match it with a template. If matching is successful, fingerprint recognition is successful and the electronic device 100 performs a subsequent corresponding operation (for example, screen unlock, APP unlock, payment unlock, or another unlock operation). If the matching fails, the fingerprint recognition fails, and the electronic device 100 does not perform the subsequent corresponding operation.

In this embodiment, the control module 40 starts the corresponding light source and the photosensitive surface 211 of the image sensor 21 based on the touch location of the user. Therefore, in a fingerprint recognition process of the electronic device 100, only some required light sources and photosensitive surfaces 211 of some required image sensors 21 are started to capture an image, and matching and determining may be implemented by only processing comparison image data formed by the photosensitive surfaces 211 of these image sensors 21. In this way, overall power consumption of the electronic device 100 is relatively low, time for capturing an image is short, and a recognition speed is fast.

An area of the fingerprint coverage region 3 ranges from 35 square millimeters to 200 square millimeters. For example, the area of the fingerprint coverage region 3 may range from 64 square millimeters to 144 square millimeters.

In this embodiment of this application, the fingerprint coverage region 3 usually includes at least two recognition regions 11. In this case, an area of each recognition region 11 is relatively small. Images captured by photosensitive surfaces 211, of image sensors 21, that are corresponding to the at least two recognition regions 11 are spliced into a final comparison image. Because the comparison image is spliced from a plurality of images, the comparison image is relatively precise. This helps improve fingerprint recognition accuracy of the electronic device 100 to which the screen assembly 20 is applied.

It may be understood that, on a premise that the fingerprint coverage region 3 meets a basic capture area, a smaller area of each recognition region 11 indicates that the comparison image is spliced from a larger quantity of images, and image quality of the comparison image and the fingerprint recognition accuracy are higher. However, a larger quantity of image sensors 21 also means higher costs. When the area of each recognition region 11 is larger, a smaller quantity of image sensors 21 can reduce costs, but a quantity of spliced images included in the comparison image is reduced, and the image quality of the comparison image and the fingerprint recognition accuracy are reduced. Therefore, in this embodiment of this application, when an area of a single recognition region 11 is designed, the requirements of recognition accuracy and costs need to be considered.

The photosensitive surface 211 of each image sensor 21 includes a plurality of sensor units arranged in an array. The sensor units may be complementary metal oxide semiconductor (complementary metal oxide semiconductor, CMOS) sensors or thin-film transistor (thin film transistor, TFT) sensors. When the sensor units are complementary metal oxide semiconductor sensors, a substrate of the image sensor 21 is made of a semiconductor material. When the sensor units are thin-film transistor sensors, the substrate of the image sensor 21 is made of an insulation material such as glass or an organic medium.

In an optional embodiment, the sensor units of each image sensor 21 is configured to sense visible light. The visible light is allowed to pass through a part or all of a region of the display panel 1. The display panel 1 is a transparent display screen. In this case, visible light reflected by a fingerprint of the user can enter the image sensor 21 after passing through the display panel 1, so that the screen assembly 20 can successfully capture the user fingerprint image. The display light emitted by the display panel 1 can be used as sensing light of the electronic device 100 in fingerprint recognition. The sensing light can be collected by the image sensor 21 after being reflected by the fingerprint of the user, to form a comparison image corresponding to the fingerprint image.

In another optional embodiment, the sensor units of each image sensor 21 is configured to sense invisible light. For example, the invisible light is near infrared ray, infrared ray, near ultraviolet ray, or ultraviolet ray. The invisible light is allowed to pass through a part or all of the area of the display panel 1. In this case, the visible light is allowed to pass through the display panel 1, or may be blocked by the display panel 1. This is not strictly limited in this application. In this embodiment, the electronic device 100 further includes a light source configured to emit invisible light. The light source may be independent of the screen assembly 20, or may be integrated into the screen assembly 20. Invisible light emitted by the light source can be collected by the image sensor 21 after being reflected by the fingerprint of the user, so that the screen assembly 20 forms the comparison image corresponding to the fingerprint image.

The display panel 1 may be an organic light-emitting diode (organic light-emitting diode, OLED) panel, a liquid crystal display (liquid crystal display, LCD), a quantum dot light emitting diode (quantum dot light emitting diodes, QLED) panel, a micro light-emitting diode (micro light-emitting diode, uLED) panel, or the like.

Refer to FIG. 3. In an optional embodiment, a single image sensor 21 includes one photosensitive surface 211. In this case, an overall size of the image sensor 21 changes with an area of the photosensitive surface 211 of the image sensor 21, and the area of the photosensitive surface is designed to be relatively small, so that the overall size of the image sensor 21 is relatively small. This helps reduce costs of the image sensor 21.

Refer to FIG. 4. FIG. 4 is a schematic structural diagram of a structure of the screen assembly 20 shown in FIG. 2 at an A-A line in another embodiment.

In another optional embodiment, a single image sensor 21 includes a plurality of photosensitive surfaces 211. When an area of a single photosensitive surface 211 is small, the plurality of photosensitive surfaces 211 may be integrated into a same image sensor 21, to make a cutting process of the image sensor 21 easier. In this way, requirements of a small size and easy processing of the image sensor 21 are met.

The plurality of photosensitive surfaces 211 of the same image sensor 21 may be disposed in a mutually spaced manner, or may be disposed next to each other. The plurality of photosensitive surfaces 211 may be disposed in a coplanar manner.

In this embodiment of this application, shapes and areas of the recognition regions 11 may be the same or different. This application is described by using an example in which the shapes and the areas of the recognition regions 11 are the same.

In this embodiment of this application, when a ratio of the area of the recognition region 11 to an area of the non-recognition region 12 meets the condition describe above, arrangement of the plurality of recognition regions 11 may be regular or random. In this embodiment of this application, an example in which the arrangement of the plurality of recognition regions 11 may be regular is used for description.

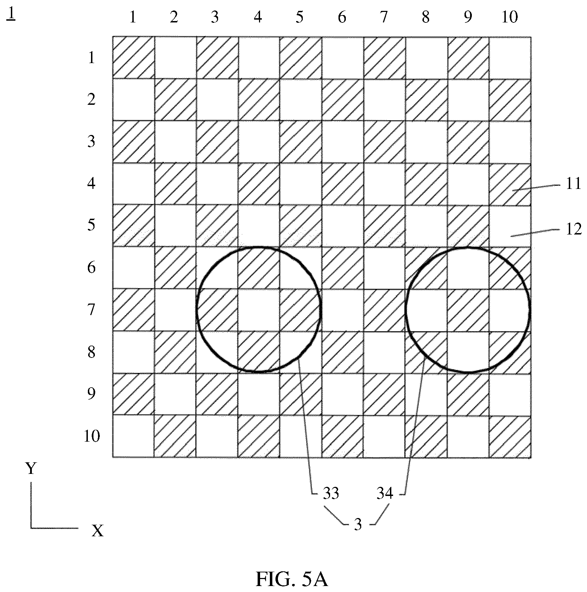

Refer to FIG. 5A. FIG. 5A is a partial schematic structural diagram of the display panel 1 of the screen assembly 20 shown in FIG. 2 in an implementation. In FIG. 5A, the recognition regions 11 are shown as squares filled with tilted lines, and the non-recognition regions 12 are shown as unfilled squares.

Optionally, the plurality of recognition regions 11 are arranged in rows and mutually spaced in a first direction X, and are arranged in columns and mutually spaced in a second direction Y. The second direction Y is perpendicular to the first direction X. All recognition regions 11 in two adjacent rows of the recognition regions 11 are arranged in different columns. In this case, all recognition regions 11 in two adjacent columns of the recognition regions 11 are arranged in different columns.

The first direction X may be parallel to a width direction (also referred to as a horizontal direction) of the screen assembly 20. The second direction Y is parallel to a length direction (also referred to as a vertical direction) of the screen assembly 20. In another embodiment, the first direction X and the second direction Y may be exchanged.

In the implementation shown in FIG. 5A, an odd-row recognition region 11 is arranged in an odd column, and an even-row recognition region 11 is arranged in an even column. The first, third, fifth, seventh, and ninth rows are odd rows. The second, fourth, sixth, eighth, and tenth rows are even rows. The first, third, fifth, seventh, and ninth columns are odd columns. The second, fourth, sixth, eighth, and tenth columns are even columns. In another embodiment, the odd-row recognition region 11 may alternatively be arranged in an even column, and the even-row recognition region 11 is arranged in an odd column.

In this embodiment, quantities of recognition regions 11 included in any two fingerprint coverage regions 3 at different locations of the screen assembly 20 are similar. To be specific, quantities of photosensitive surfaces 211, corresponding to the two fingerprint coverage regions 3, of the image sensors 21 are similar. Therefore, the screen assembly 20 can obtain the sufficient effective capture area in different scenarios, so that the fingerprint recognition accuracy of the electronic device 100 is higher.

In an optional embodiment, the ratio of the total area of all the recognition regions 11 to the total area of all the non-recognition regions in the fingerprint coverage region 3 falls within a range of 1:0.8 to 1:1.2. In this case, in the first direction X, a spacing between two adjacent recognition regions 11 may be equal to, slightly greater than, or slightly less than a length of the recognition region 11. In the second direction Y, a spacing between two adjacent recognition regions 11 may also be equal to, slightly greater than, or slightly less than the length of the recognition region 11.

In this embodiment, requirements of manufacturing tolerance, assembly tolerance, total image capture area, costs and the like can be comprehensively considered for the screen assembly 20, to obtain a higher product yield, higher fingerprint recognition accuracy, and lower costs.

In this embodiment of this application, there are a plurality of manners to arrange the recognition regions 11 and non-recognition regions 12 on the display panel 1, including but not limited to the following arrangement manners.

Refer to FIG. 5B. FIG. 5B is a schematic diagram of an arrangement manner of the recognition regions 11 and the non-recognition regions 12 of the display panel 1 shown in FIG. 5A. In FIG. 5B, the recognition regions 11 are shown as grids filled with tilted lines, and the non-recognition regions 12 are shown as unfilled grids.

In the arrangement manner, the display panel 1 includes a plurality of non-recognition regions 12. The plurality of non-recognition regions 12 are separated by the recognition regions 11. In the first direction X, a length L1 of each recognition region 11 is equal to a spacing L2 between two adjacent recognition regions 11. The spacing L2 is equal to a length of the non-recognition region 12 in the first direction X. In the second direction Y, a length L3 of each recognition region 11 is equal to a spacing L4 between two adjacent recognition regions 11. The spacing L4 is equal to a length of the non-recognition region 12 in the second direction Y. In this case, a shape and a size of the non-recognition region 12 are the same as those of the recognition region 11.

Refer to FIG. 5A and FIG. 5B. In FIG. 5A, a circular fingerprint coverage region 3 is used as an example for illustration. For example, a size of each recognition region 11 is 3 millimeters x 3 millimeters. The fingerprint coverage region 3 is a circular area with a diameter of 9 mm. A third fingerprint coverage region 33 includes four recognition regions 11. Correspondingly, photosensitive surfaces 211, of four image sensors 21 on the recognition panel 2, that are corresponding to the four recognition regions 11 are configured to capture the user fingerprint image. In this case, the effective capture area is 36 square millimeters. A minimum capture area requirement of fingerprint recognition can be met. A fourth fingerprint coverage region 34 includes five recognition regions 11. Correspondingly, photosensitive surfaces 211, of five image sensors 21 on the recognition panel 2, that are corresponding to the five recognition regions 11 are configured to capture the user fingerprint image. In this case, the effective capture area is 45 square millimeters. The minimum capture area requirement of fingerprint recognition can be met. In this embodiment, quantities of photosensitive surfaces 211, of the image sensors 21, that are corresponding to any two fingerprint coverage regions 3 at different locations of the screen assembly 20 are similar, so that the screen assembly 20 can obtain the sufficient effective capture area in different use scenarios.

Refer to FIG. 5C. FIG. 5C is a schematic diagram of another arrangement manner of the recognition regions 11 and the non-recognition regions 12 of the display panel 1 shown in FIG. 5A. In FIG. 5C, the recognition regions 11 are shown as grids filled with tilted lines, and the non-recognition regions 12 are shown as unfilled grids.

In the another arrangement manner, the non-recognition regions 12 are an integral area. In the first direction X, the length L1 of each recognition region 11 is less than the spacing L2 between two adjacent recognition regions 11. The spacing L2 is a length of a part, located between two adjacent recognition regions 11, of the non-recognition region 12 in the first direction X. In the second direction Y, the length L3 of each recognition region 11 is less than the spacing L4 between two adjacent recognition regions 11. The spacing L4 is a length of the part, located between two adjacent recognition regions 11, of the non-recognition region 12 in the second direction Y.

Refer to FIG. 5D. FIG. 5D is a schematic diagram of still another arrangement manner of the recognition regions 11 and the non-recognition regions 12 of the display panel 1 shown in FIG. 5A. In FIG. 5D, the recognition regions 11 are shown as grids filled with tilted lines, and the non-recognition regions 12 are shown as unfilled grids.

In the still another arrangement manner, the display panel 1 includes a plurality of non-recognition regions 12. The plurality of non-recognition regions 12 are separated by the recognition regions 11. In the first direction X, the length L1 of each recognition region 11 is greater than the spacing L2 between two adjacent recognition regions 11. The spacing L2 is the length of the non-recognition region 12 in the first direction X. In the second direction Y, the length L3 of each recognition region 11 is greater than the spacing L4 between two adjacent recognition regions 11. The spacing L4 is the length of the non-recognition region 12 in the second direction Y. The shape of the non-recognition region 12 is the same as or similar to that of the recognition region 11. The area of the non-recognition region 12 is less than the area of the recognition region 11. In this embodiment, there is a small amount of redundancy in an image formed by splicing images in a plurality of recognition regions 11. A proper comparison image may be obtained by processing the image, to improve the fingerprint recognition accuracy of electronic device 100.

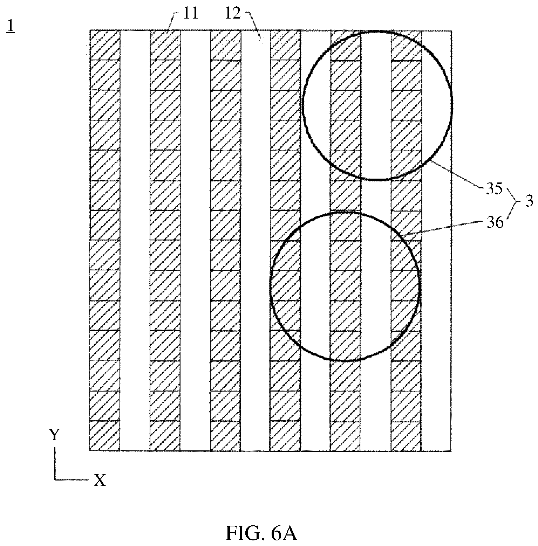

Refer to FIG. 6A. FIG. 6A is a partial schematic structural diagram of the display panel 1 of the screen assembly 20 shown in FIG. 2 in another implementation. In FIG. 6A, the recognition regions 11 are shown as squares filled with tilted lines, and the non-recognition regions 12 are shown as unfilled squares.

Optionally, a plurality of recognition regions 11 are arranged in a mutually spaced manner in the first direction X. To be specific, in the first direction X, the non-recognition region 12 is arranged between any two adjacent recognition regions 11. In this case, in the first direction X, a distance between any two adjacent recognition regions 11 has a first size, and the length of each recognition region 11 has a second size. The first size is also the length of the part, located between two adjacent recognition regions 11, of the non-recognition region 12 in the first direction X. The first size may be greater than, equal to, or less than the second size. A size relationship between the first size and the second size is not strictly limited in this embodiment of this application.

In the implementation shown in FIG. 6A, the plurality of recognition regions 11 are consecutively arranged in columns in the second direction Y. The second direction Y is perpendicular to the first direction X. In this case, two adjacent recognition regions 11 in the second direction Y are next to each other. To be specific, the distance (which may be zero, a negative value, or a positive value) between two adjacent recognition regions 11 in the second direction Y is far less than the distance between two adjacent recognition regions 11 in the first direction X. In this case, the display panel 1 includes a plurality of non-recognition regions 12. A strip-shaped non-recognition region 12 is formed between any two adjacent columns of recognition regions 11. In another embodiment, the plurality of recognition regions 11 may alternatively be arranged in another manner in the second direction Y, for example, arranged in a mutually spaced manner.

In FIG. 6A, a circular fingerprint coverage region 3 is used as an example for illustration. For example, the size of each recognition region 11 is 2 millimeters x 2 millimeters. The fingerprint coverage region 3 is a circular area with a diameter of 10 mm. A fifth fingerprint coverage region 35 includes 10 recognition regions 11. Correspondingly, photosensitive surfaces 211, of 10 image sensors 21 on the recognition panel 2, that are corresponding to the 10 recognition regions 11 are configured to capture the user fingerprint image. In this case, the effective capture area is 40 square millimeters. The minimum capture area requirement of fingerprint recognition can be met. A sixth fingerprint coverage region 36 includes 15 recognition regions 11. Correspondingly, photosensitive surfaces 211, of 15 image sensors 21 on the recognition panel 2, that are corresponding to the 15 recognition regions 11 are configured to capture the user fingerprint image. In this case, the effective capture area is 60 square millimeters. The minimum capture area requirement of fingerprint recognition can be met.

In this implementation, the plurality of recognition regions 11 are arranged in a mutually spaced manner in the first direction. Therefore, when the two fingerprint coverage regions 3 are located at different locations on the display panel 1, quantities, of the photosensitive surfaces 211 that are of the image sensors 21 and that are corresponding to the two fingerprint coverage regions 3, are the same or similar, to ensure that the screen assembly 20 can obtain the sufficient effective capture area in different scenarios. In this way, the fingerprint recognition accuracy of the electronic device 100 is high.

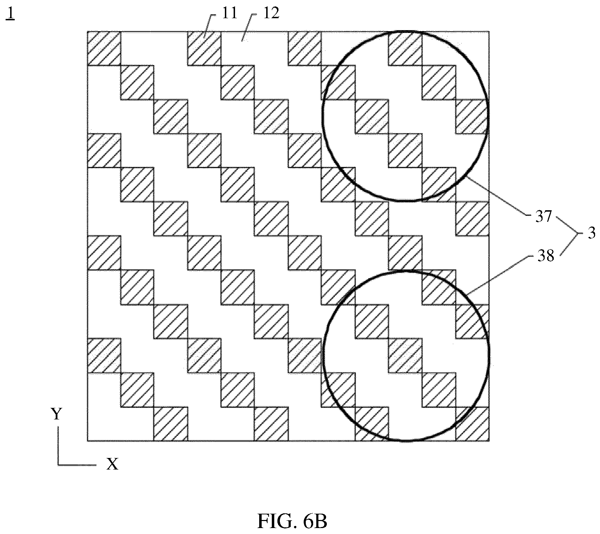

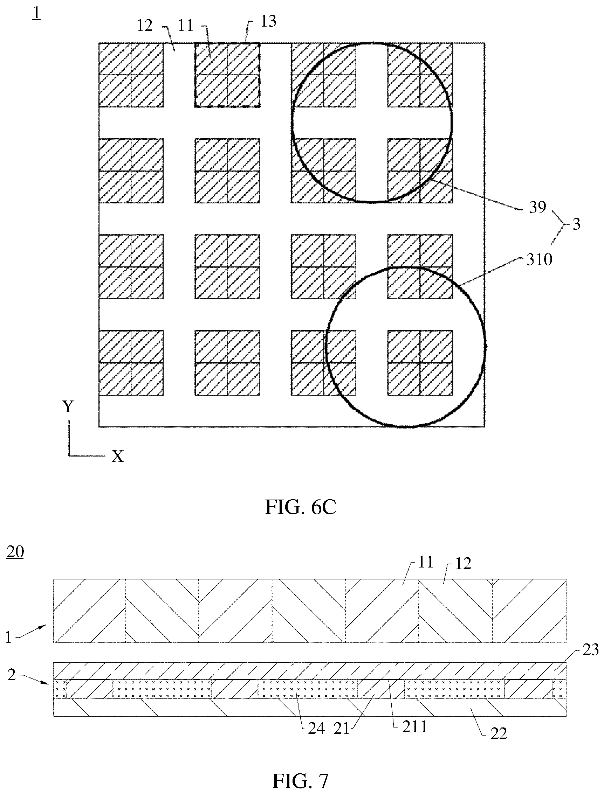

FIG. 6B is a partial schematic structural diagram of the display panel 1 of the screen assembly 20 shown in FIG. 2 in still another implementation. In FIG. 6C, the recognition regions 111 are shown as squares filled with tilted lines, and the non-recognition regions 112 are shown as unfilled squares.

Optionally, a plurality of recognition regions 111 are arranged in a mutually spaced manner in the first direction. To be specific, in the first direction, at least one non-recognition region 112 is arranged between any two adjacent recognition regions 111. The first direction is a row direction or a column direction of an area array formed by the plurality of areas 11. In the first direction, the plurality of recognition regions 111 and a plurality of non-recognition regions 112 may be arranged alternately in a one-one manner, a one-two manner, or a two-one manner. This is not strictly limited in this application.

The plurality of recognition regions 111 are arranged in a mutually spaced manner in the second direction. The second direction is perpendicular to the first direction. To be specific, in the second direction, at least one non-recognition region 112 is arranged between any two adjacent recognition regions 111. In the implementation shown in FIG. 6B, the first size is greater than the second size. For example, the first size is equal to twice the second size. The third size is larger than the fourth size. For example, the third size is equal to twice the fourth size. In this case, the plurality of recognition regions 11 are arranged consecutively in a diagonal direction between the first direction X and the second direction Y. The display panel 1 includes a plurality of non-recognition regions 12. The non-recognition region 12 is formed between two adjacent strips of recognition regions 11 in the diagonal direction. The non-recognition region 12 is roughly a stepped strip.

In the implementation shown in FIG. 6B, the size of each area 11 is 2 millimeters x 2 millimeters. The fingerprint coverage region 3 is a circular area with the diameter of 10 mm. A seventh fingerprint coverage region 37 includes eight recognition regions 11. Correspondingly, photosensitive surfaces 211, of eight image sensors 21 on the recognition panel 2, that are corresponding to the eight recognition regions 11 are configured to capture the user fingerprint image. In this case, the effective capture area is 32 square millimeters. The minimum capture area requirement of fingerprint recognition can be met. An eighth fingerprint coverage region 38 includes nine recognition regions 11. Correspondingly, photosensitive surfaces 211, of nine image sensors 21 on the recognition panel 2, that are corresponding to the nine recognition regions 11 are configured to capture the user fingerprint image. In this case, the effective capture area is 36 square millimeters. The minimum capture area requirement of fingerprint recognition can be met.

In this implementation, when the plurality of recognition regions 11 are arranged in the mutually spaced manners in the first direction and the second direction, the quantities, of photosensitive surfaces 211 that are of the image sensors 21 and that are corresponding to the two fingerprint coverage regions 3 located at different locations on the display panel 1, are the same or more similar. This further ensures that the screen assembly 20 can obtain the sufficient effective capture area in different scenarios, so that the fingerprint recognition accuracy of the electronic device 100 is higher.

An arrangement manner of the plurality of recognition regions 11 and the plurality of non-recognition regions 12 in the first direction is the same as an arrangement manner of the plurality of recognition regions 11 and the plurality of non-recognition regions 12 in the second direction. In this case, reliability of obtaining the sufficient effective capture area by the screen assembly 20 in different scenarios is higher, and the fingerprint recognition accuracy of the electronic device 100 is higher. Certainly, in another embodiment, the arrangement manner of the plurality of recognition regions 11 in the first direction may be different from the arrangement manner of the plurality of recognition regions 11 in the second direction.

Refer to FIG. 6C. FIG. 6C is a partial schematic structural diagram of the display panel 1 of the screen assembly 20 shown in FIG. 2 in still another implementation. In FIG. 6C, the recognition regions 11 are shown as squares filled with tilted lines, and the non-recognition regions 12 are shown as unfilled squares.

Optionally, the plurality of recognition regions 11 include a plurality of recognition region groups 13. Each recognition region group 13 includes at least two recognition regions 11 that are next to each other. Any two adjacent recognition region groups 13 are disposed in a mutually spaced manner. That at least two recognition regions 11 are next to each other means that a spacing between two adjacent recognition regions 11 in a same recognition region group 13 is far less than a spacing between two adjacent recognition region groups 13. The non-recognition region 12 is formed between any two adjacent recognition region groups 13. The plurality of recognition region groups 13 are arranged in a mutually spaced manner in the first direction X, and are arranged in a mutually spaced or consecutive manner in the second direction Y. The second direction Y is perpendicular to the first direction X.

In the implementation shown in FIG. 6C, each recognition region group 13 includes four recognition regions 11 arranged in an array. Two of the four recognition regions 11 are arranged in the first direction X, and the other two are arranged in the second direction Y. In this implementation, the non-recognition regions 12 of the display panel 1 are an integral area. In the first direction X, the non-recognition region 12 is arranged between two adjacent recognition region groups 13. In the second direction Y, the non-recognition region 12 is arranged between two adjacent recognition region groups 13.

The size of each recognition region 11 is 2 millimeters x 2 millimeters. The fingerprint coverage region 3 is a circular area with the diameter of 10 mm. A ninth fingerprint coverage region 39 includes 16 recognition regions 11. Correspondingly, photosensitive surfaces 211, of 16 image sensors 21 on the recognition panel 2, that are corresponding to the 16 recognition regions 11 are configured to capture the user fingerprint image. In this case, the effective capture area is 64 square millimeters. The minimum capture area requirement of fingerprint recognition can be met. A tenth fingerprint coverage region 310 includes nine recognition regions 11. Correspondingly, photosensitive surfaces 211, of nine image sensors 21 on the recognition panel 2, that are corresponding to the nine recognition regions 11 are configured to capture the user fingerprint image. In this case, the effective capture area is 36 square millimeters. The minimum capture area requirement of fingerprint recognition can be met.

In this implementation, because each recognition region group 13 includes the at least two recognition regions 11, and any two adjacent recognition region groups 13 are disposed in the mutually spaced manner, an arrangement manner of the recognition regions 11 is more diversified. This helps meet respective fingerprint recognition requirements of different electronic devices 100. In addition, because each recognition region group 13 includes the at least two recognition regions 11, the recognition regions 11 can capture a continuous image in a small area, and the final comparison image created by the screen assembly 20 is spliced from at least two continuous images. The final comparison image is easier to be compared with a standard image in the electronic device 100. Therefore, the fingerprint recognition accuracy of the electronic device 100 is higher.

In another implementation, there may be another manner for setting a quantity of the recognition regions 11 included in the recognition region group 13, arranging the recognition regions 11 in the recognition region group 13, and the like. This is not strictly limited in this application.

The fingerprint coverage region 3 includes at least two recognition region groups 13. In this case, the final comparison image created by the screen assembly 20 is spliced from images captured by the at least two of the recognition region groups 13, and image quality is relatively high, so that the fingerprint recognition accuracy of the electronic device 100 to which the screen assembly 20 is applied is relatively high.

Refer to FIG. 7. FIG. 7 is a schematic structural diagram of the screen assembly 20 shown in FIG. 3 in a first embodiment. In the first embodiment, an example in which a single image sensor 21 includes one photosensitive surface 211 is used for description. In another embodiment, the single image sensor 21 may alternatively include a plurality of photosensitive surfaces 211. Another feature of this embodiment may be set with reference to the first embodiment, and details are not described herein again.

The recognition panel 2 further includes a substrate 22 and an optical layer 23. The substrate 22 is located on the non-light-emitting side of the display panel 1. A plurality of image sensors 21 are fastened to a side, facing the display panel 1, of the substrate 22. Photosensitive surfaces 211 of the image sensors 21 are disposed away from the substrate 22, that is, disposed facing the display panel 1. The optical layer 23 is located between the plurality of image sensors 21 and the display panel 1. The optical layer 23 is configured to image a user fingerprint image on the light-emitting side of the recognition region 11 to a photosensitive surface 211 of a corresponding image sensor 21. The screen assembly 20 processes, by using the optical layer 23, light reflected by the fingerprint of the user, to form a corresponding captured image on the photosensitive surface 211 of the corresponding image sensor 21. The captured image is corresponding to the user fingerprint image.

In this embodiment, the optical layer 23 is disposed in the screen assembly 20, and the optical layer 23 can change a light state. Therefore, a relative location relationship between the photosensitive surfaces 211 of the image sensors 21 and the display panel 1 can be changed by setting a structure and a size of the optical layer 23, so that the structure of the screen assembly 20 is more diversified, and the screen assembly 20 has a wider application scope.

In this embodiment, arrangement locations of the photosensitive surfaces 211 of the plurality of image sensors 21 corresponds to arrangement locations of the plurality of recognition regions 11. The photosensitive surfaces 211 of the plurality of image sensors 21 may capture, in a one-to-one correspondence, user fingerprint images located in the plurality of recognition regions 11. In this case, the optical layer 23 makes a minor change to a propagation direction of the light, so that a risk of insufficient precision of the final comparison image caused by a distortion of the light in a propagation process can be reduced, and the fingerprint recognition accuracy of the electronic device 100 to which the screen assembly 20 is applied is relatively high. A single image sensor 21 may include one photosensitive surface 211 (as shown in FIG. 7) or a plurality of photosensitive surfaces 211 (refer to FIG. 4).

In another implementation, the optical layer 23 may change the propagation direction of the light. Therefore, a relative location relationship between the photosensitive surfaces 211 of the plurality of image sensors 21 may be slightly different from a relative location relationship between the plurality of recognition regions 11.

For example, the propagation direction of the light may be changed by the optical layer 23, so that the photosensitive surface 211 of the single image sensor 21 can capture fingerprint images in two or more recognition regions 11 at the same time. Therefore, a total number of the image sensors 21 is less than a total number of the recognition regions 11, so that the costs of the screen assembly 20 are lower.

For example, the single image sensor 21 includes a plurality of photosensitive surfaces 211, and the plurality of photosensitive surfaces 211 are next to each other. The plurality of recognition regions 11 corresponding to the plurality of photosensitive surfaces 211 are disposed in a mutually spaced manner. The propagation direction of the light is changed by the optical layer 23, so that light entering these recognition regions 11 is converged and emitted into the plurality of photosensitive surfaces 211 that are next to each other, to implement image capturing.

In an embodiment, the substrate 22 may be a rigid printed circuit board (printed circuit board, PCB). In another embodiment, the substrate 22 may include a flexible printed circuit (flexible printed circuit, FPC) and a reinforcement board. The reinforcement board and the flexible printed circuit are disposed in a stacked manner.

In an embodiment, the plurality of image sensors 21 may be directly bonded (bonding) to the substrate 22 in a die attach (die attach) manner. In another embodiment, the plurality of image sensors 21 may be connected to form an integrated package structure by using a fan-out (fan-out) process, and then the package structure is entirely attached to the substrate 22.

Optionally, the recognition panel 2 further includes a package 24. The package 24 is located on the side, facing the display panel 1, of the substrate 22, and is disposed around the plurality of image sensors 21. In this case, the plurality of image sensors 21 are packaged into the integrated package structure by using the package 24. The fan-out process may be used when the plurality of image sensors 21 are packaged by using the package 24. The optical layer 23 covers the package 24 and the plurality of image sensors 21. In this case, the optical layer 23 may be an integrated structure.

In this embodiment, the plurality of image sensors 21 can first be packaged into the integrated package structure by using the package 24. Then, the package structure is attached to the substrate 22. Next, the optical layer 23 that is also an integrated structure is covered on the package 24 and the plurality of image sensors 21. In this way, few assembly process steps and low process difficulty of the screen assembly 20 help reduce production costs of the screen assembly 20.

The package 24 may be made of a light shielding material, to reduce a risk of poor quality of the captured image caused by optical crosstalk.

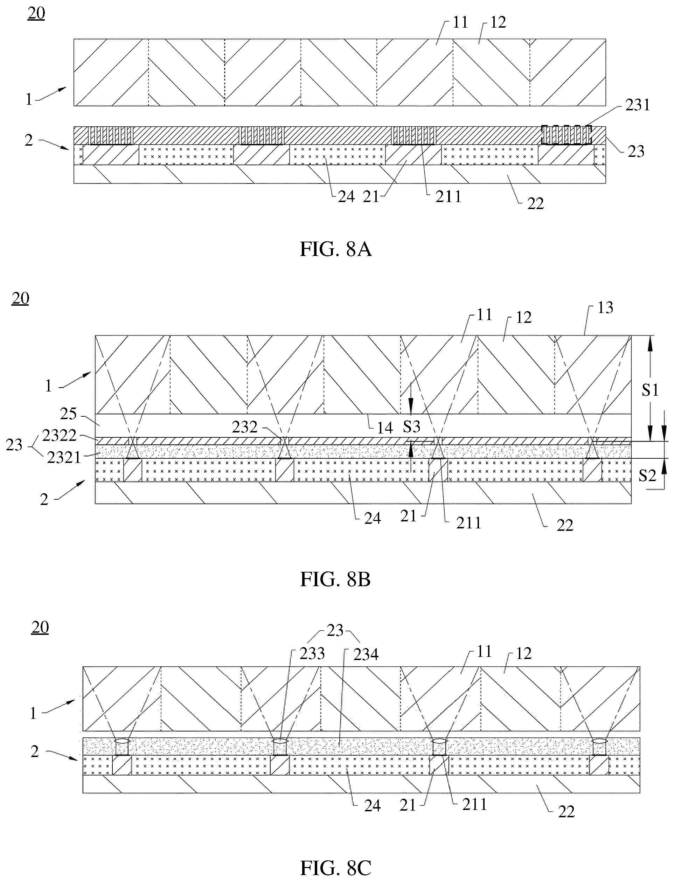

Refer to FIG. 8A. FIG. 8A is a schematic structural diagram of the screen assembly 20 shown in FIG. 7 in a first implementation.

In an optional embodiment, the optical layer 23 includes a plurality of collimators 231. The collimators 231 are configured to convert divergent light into collimated light. The plurality of collimators 231 are disposed facing the photosensitive surfaces 211 of the plurality of image sensors 21 in a one-to-one correspondence.

In this embodiment, the plurality of collimators 231 image a captured image with an object image ratio of 1:1 on the photosensitive surfaces 211 of the image sensors 21. The plurality of collimators 231 can collimate the light reflected by the fingerprint of the user, so that image quality of the captured image is relatively high, and the screen assembly 20 can form a relatively high-quality comparison image. Therefore, the fingerprint recognition precision of the electronic device 100 is relatively high.

Because the collimators 231 are configured to image the captured image with the object image ratio of 1:1, an area of the photosensitive surface 211 of the image sensor 21 is similar to an area of the recognition region 11 on the display panel 1. A tolerance of the plurality of image sensors 21 during assembly is considered, so that a proper avoidance may be reserved between two image sensors 21 that are close to each other, to improve assembly precision and a product yield of the screen assembly 20. In this case, correspondingly, the area of the recognition region 11 is appropriately reduced.

The plurality of image sensors 21 may first be packaged by using the package 24, and then the optical layer 23 is assembled. In this case, the optical layer 23 may be an integrated structure including a plurality of collimators 231. For example, each collimator 231 may be a thin film, having a collimation hole, that is formed first. Then, each collimator 231 is attached to a photosensitive surface 211 of a corresponding image sensor 21. The plurality of collimators 231 are integrally formed in a same thin film.

In another implementation, the optical layer 23 may also include a substrate and a light blocking film. The substrate is made of a transparent material. The light blocking film is stacked on the substrate. A plurality of sets of collimation holes are on the light blocking film. Each set of collimation holes correspondingly form a collimator 231.

Refer to FIG. 8B. FIG. 8B is a schematic structural diagram of the screen assembly 20 shown in FIG. 7 in a second implementation.

In an optional embodiment, the optical layer 23 includes a plurality of light transmission holes 232. The optical layer 23 may include a substrate 2321 and a light shielding film 2322. The substrate 2321 may be an integrally formed structure. The light shielding film 2322 may also be an integrally formed structure. The light shielding film 2322 is located on a side, facing the display panel 1, of the substrate 2321. The substrate 2321 is made of a transparent material, for example, glass or polycarbonate (polycarbonate, PC). The plurality of light transmission holes 232 are on the light shielding film 2322. The light shielding film 2322 is made of a light shielding material. The plurality of light transmission holes 232 are disposed facing the photosensitive surfaces 211 of the plurality of image sensors 21 in a one-to-one correspondence. A first spacing S1 is formed between a center of each light transmission hole 232 and a light-emitting surface 13 of the display panel 1. A second spacing S2 is formed between the center of each light transmission hole 232 and the photosensitive surface 211 of the image sensor 21. The first spacing S1 is greater than the second spacing S2. In other words, a distance between the center of each light transmission hole 232 and the light-emitting surface 13 of the display panel 1 is greater than a distance between the center of each light transmission hole 232 and the photosensitive surface 211 of the image sensor 21.

In this embodiment, according to a pinhole imaging principle, the plurality of light transmission holes 232 image a captured image with an object image ratio X:1 on the photosensitive surface 211 of the image sensor 21. X is greater than 1. In this case, the area of the captured image is less than the area of the recognition region 11 on the display panel 1. Therefore, when the area of the recognition region 11 remains unchanged, the area of the photosensitive surface 211 of the image sensor 21 can be reduced, to reduce the costs of the image sensor 21 and the costs of the screen assembly 20. In addition, when the area of the photosensitive surface 211 of the image sensor 21 remains unchanged, the area of the recognition region 11 corresponding to the image sensor 21 increases, and redundant splicing may be used to splice the plurality of recognition regions 11, to improve the fingerprint recognition accuracy of the electronic device 100.

The screen assembly 20 may reduce the area of the photosensitive surface 211 of the image sensor 21, or increase the area of the recognition region 11 corresponding to the photosensitive surface 211 of the image sensor 21, by adjusting sizes of the first spacing S1 and the second spacing S2.

The light-emitting surface 13 of the display panel 1 is a surface, away from the recognition panel 2, of the display panel 1. A non-light-emitting surface 14 of the display panel 1 is disposed opposite to the light-emitting surface 13 of the display panel 1. A spacing S3 is formed between the non-light-emitting surface 14 of the display panel 1 and the center of the light transmission hole 232. The size of the first spacing S1 may be adjusted by adjusting a size of the spacing S3.

The substrate 2321 of the optical layer 23 has a thickness (a size in a direction perpendicular to the photosensitive surface 211 of the image sensor 21). A size of the second spacing S2 may be adjusted by adjusting the thickness of the substrate 2321.

Optionally, the screen assembly 20 further includes a transparent bonding layer 25. The bonding layer 25 is bonded between the display panel 1 and the optical layer 23. In this embodiment, the bonding layer 25 is filled between the display panel 1 and the optical layer 23. The bonding layer 25 may bond the optical layer 23 to the display panel 1, and may also prevent light from affecting quality of the captured image due to scattering of the air layer. The bonding layer 25 may be made of a transparent optical adhesive.

Refer to FIG. 8C. FIG. 8C is a schematic structural diagram of the screen assembly 20 shown in FIG. 7 in a third implementation.

In an optional embodiment, the optical layer 23 includes a plurality of lenses 233. The plurality of lenses 233 are disposed facing the photosensitive surfaces 211 of the plurality of image sensors 21 in a one-to-one correspondence. The lenses 233 are configured to image the user fingerprint images and scale down the user fingerprint images to the photosensitive surfaces 211 of the image sensors 21. The lenses 233 are configured for light concentration. The optical layer 23 further includes a fastening substrate 234. The fastening substrate 234 is made of a transparent material. The plurality of lenses 233 are fastened on the fastening substrate 234, to form an integrated structure with the fastening substrate 234.

In this embodiment, the lenses 233 are configured to image the user fingerprint images and scale down the user fingerprint images to the photosensitive surfaces 211 of the image sensors 21. A ratio of the area of the captured image formed on the photosensitive surface 211 of the image sensor 21 to the area of the corresponding recognition region 11 is less than 1. In other words, the object image ratio is greater than 1. In this case, the area of the captured image is less than the area of the recognition region 11 on the display panel 1. Therefore, when the area of the recognition region 11 remains unchanged, the area of the photosensitive surface 211 of the image sensor 21 can be reduced, to reduce the costs of the image sensor 21 and the costs of the screen assembly 20. In addition, when the area of the photosensitive surface 211 of the image sensor 21 remains unchanged, the area of the recognition region 11 corresponding to the image sensor 21 increases, and the redundant splicing may be used to splice the plurality of recognition regions 11, to improve the fingerprint recognition accuracy of the electronic device 100.

A single lens 233 may include one or more sub-lenses. In this implementation, the single lens 233 includes one sub-lens. The sub-lens is a convex lens. In another implementation, the single lens 233 includes a plurality of sub-lenses. The plurality of sub-lenses may be a plurality of convex lenses, or a combination of a concave lens and a convex lens. In another implementation, the lenses 233 may alternatively be planar lenses made by using a metamaterial structure.

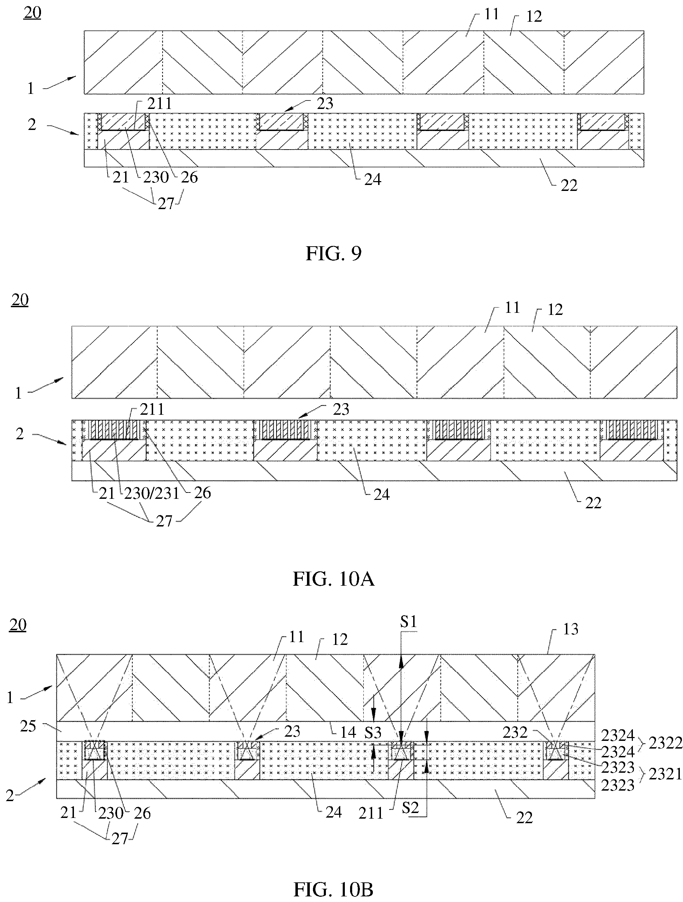

Refer to FIG. 9. FIG. 9 is a schematic structural diagram of the screen assembly 20 shown in FIG. 3 in a second embodiment. In the second embodiment, an example in which a single image sensor 21 includes one photosensitive surface 211 is used for description. In another embodiment, the single image sensor 21 may alternatively include a plurality of photosensitive surfaces 211. Another feature of this embodiment may be set with reference to the second embodiment, and details are not described herein again.

In an optional embodiment, the optical layer 23 includes a plurality of optical parts 230. The plurality of optical parts 230 are disposed in a mutually spaced manner. The plurality of optical parts 230 are located on an image capturing side of corresponding image sensors 21, that is, located above photosensitive surfaces 211 of the image sensors 21. The plurality of optical parts 230 are located on the plurality of image sensors 21 in a one-to-one correspondence. When a single image sensor 21 includes a plurality of photosensitive surfaces 211, a plurality of optical parts 230 may be disposed on the image sensor 21, and the plurality of optical parts 230 are disposed on the plurality of photosensitive surfaces 211 in a one-to-one correspondence. The recognition panel 2 further includes a plurality of package bodies 26. The plurality of package bodies 26 are disposed with the plurality of optical parts 230 in a one-to-one correspondence. Each package body 26 is configured to package a corresponding optical part 230 and a corresponding image sensor 21 into an integrated unit assembly 27.

The recognition panel 2 further includes the package 24. The package 24 is located on the side, facing the display panel 1, of the substrate 22, and is disposed around the plurality of image sensors 21 and the plurality of optical parts 230. In an embodiment, the image sensor 21 and the optical part 230 located above the image sensor 21 may first form the unit assembly 27. After a plurality of unit assemblies 27 are fastened to the substrate 22, the plurality of unit assemblies 27 and the substrate 22 are packaged into an integrated structure by using the package 24. In another embodiment, the image sensor 21 and the optical part 230 located above the image sensor 21 may first form the unit assembly 27. After a plurality of unit assemblies 27 are packaged into an integrated structure by using the package 24, the structure is attached to the substrate 22, to complete assembly.

In this embodiment, the corresponding optical part 230 and the corresponding image sensor 21 may form the unit assembly 27, and then a plurality of unit assemblies 27 are fastened to the substrate 22 based on a specific arrangement requirement. Therefore, the screen assembly 20 may form, without changing a material type, different recognition panels 2 by changing a location of the unit assemblies 27. This facilitates batching and multi-modeling of the screen assembly 20.

A material of the package body 26 in the unit assembly 27 may be the same as or different from the material of the package 24. This is not strictly limited in this application. In an embodiment, one or both of the package 26 and the package 24 may be made of the light shielding material, to reduce the risk of poor quality of the captured image caused by the optical crosstalk.

Refer to FIG. 10A. FIG. 10A is a schematic structural diagram of the screen assembly 20 shown in FIG. 9 in a first implementation.

In an optional embodiment, the optical layer 23 includes a plurality of collimators 231. The plurality of collimators 231 are disposed facing the photosensitive surfaces 211 of the plurality of image sensors 21 in a one-to-one correspondence. The plurality of collimators 231 are disposed in a mutually spaced manner. Each optical part 230 includes one collimator 231 (corresponding to the solution in which a single sensor 21 includes one photosensitive surface 211) or a plurality of collimators 231 (corresponding to the solution in which a single sensor 21 includes a plurality of photosensitive surfaces 211). The collimators 231 are configured to convert the divergent light into the collimated light. A corresponding image sensor 21 and a corresponding optical part 230 may first form a unit assembly 27, and then be packaged by using the package 24. To be specific, the collimator 231 is first fastened to the corresponding image sensor 21 by using the package body 26, to form an integrated and modular unit assembly 27. Then, a plurality of unit assemblies 27 are fastened to the substrate 22 by using the package 24, to form the recognition panel 2.

In this embodiment, the plurality of collimators 231 image the captured image with the object image ratio of 1:1 on the photosensitive surfaces 211 of the image sensors 21. The plurality of collimators 231 can collimate the light reflected by the fingerprint of the user, so that the image quality of the captured image is relatively high, and the screen assembly 20 can form the relatively high-quality comparison image. Therefore, the fingerprint recognition precision of the electronic device 100 is relatively high.

Because the collimators 231 are configured to image the captured image with the object image ratio of 1:1, the area of the photosensitive surface 211 of the image sensor 21 is similar to the area of the recognition region 11 on the display panel 1. The tolerance of the plurality of image sensors 21 during assembly is considered, so that the proper avoidance may be reserved between the two image sensors 21 that are close to each other, to improve the assembly precision and the product yield of the screen assembly 20. In this case, correspondingly, the area of the recognition region 11 is appropriately reduced.

Each collimator 231 may be directly formed on the photosensitive surface 211 of the image sensor 21 by using a wafer level (wafer level) processing technology. For example, a collimation hole structure may be deposited or etched on the photosensitive surface 211 of the image sensor 21 by using a multi-layer mask (mask) process, to form the collimator 231.

Refer to FIG. 10B. FIG. 10B is a schematic structural diagram of the screen assembly 20 shown in FIG. 9 in a second implementation.

In an optional embodiment, the optical layer 23 includes a plurality of light transmission holes 232. The optical layer 23 may include the substrate 2321 and the light shielding film 2322. The light shielding film 2322 is located on the side, facing the display panel 1, of the substrate 2321. The substrate 2321 is made of a transparent material, for example, glass or polycarbonate (polycarbonate, PC). The plurality of light transmission holes 232 are on the light shielding film 2322. The light shielding film 2322 is made of a light shielding material. The plurality of light transmission holes 232 are disposed facing the photosensitive surfaces 211 of the plurality of image sensors 21 in a one-to-one correspondence. Specifically, the substrate 2321 includes a plurality of substrate parts 2323. The plurality of substrate parts 2323 are disposed in a mutually spaced manner. The plurality of substrate parts 2323 are disposed facing the plurality of image sensors 21 in a one-to-one correspondence. The light shielding film 2322 includes a plurality of light shielding parts 2324. The plurality of light shielding parts 2324 are disposed in a mutually spaced manner. Each light shielding part 2324 is provided with a light transmission hole 232. A quantity of the light transmission holes 232 is the same as a quantity of photosensitive surfaces 211 on the corresponding image sensors 21. The plurality of light shielding parts 2324 are located on the plurality of substrate parts 2323 in a one-to-one correspondence. The light shielding parts 2324 and the substrate parts 2323 are fastened to the corresponding image sensors 21 by using the package bodies 26, to form integrated and modular unit assemblies 27.

The first spacing S1 is formed between the center of each light transmission hole 232 and the light-emitting surface 13 of the display panel 1. The second spacing S2 is formed between the center of each light transmission hole 232 and the photosensitive surface 211 of the image sensor 21. The first spacing S1 is greater than the second spacing S2. In other words, the distance between the center of each light transmission hole 232 and the light-emitting surface 13 of the display panel 1 is greater than the distance between the center of each light transmission hole 232 and the photosensitive surface 211 of the image sensor 21.

In this embodiment, according to the pinhole imaging principle, the plurality of light transmission holes 232 image the captured image with the object image ratio X:1 on the photosensitive surface 211 of the image sensor 21. X is greater than 1. In this case, the area of the captured image is less than the area of the recognition region 11 on the display panel 1. Therefore, when the area of the recognition region 11 remains unchanged, the area of the photosensitive surface 211 of the image sensor 21 can be reduced, to reduce the costs of the image sensor 21 and the costs of the screen assembly 20. In addition, when the area of the photosensitive surface 211 of the image sensor 21 remains unchanged, the area of the recognition region 11 corresponding to the image sensor 21 increases, and the redundant splicing may be used to splice the plurality of recognition regions 11, to improve the fingerprint recognition accuracy of the electronic device 100.

The screen assembly 20 may reduce the area of the photosensitive surface 211 of the image sensor 21, or increase the area of the recognition region 11 corresponding to the image sensor 21, by adjusting the sizes of the first spacing S1 and the second spacing S2.

The light-emitting surface 13 of the display panel 1 is the surface, away from the recognition panel 2, of the display panel 1. The non-light-emitting surface 14 of the display panel 1 is disposed opposite to the light-emitting surface 13 of the display panel 1. The spacing S3 is formed between the non-light-emitting surface 14 of the display panel 1 and the center of the light transmission hole 232. The size of the first spacing S1 may be adjusted by adjusting the size of the spacing S3.

The substrate 2321 of the optical layer 23 has the thickness (the size in the direction perpendicular to the photosensitive surface 211 of the image sensor 21). The size of the second spacing S2 may be adjusted by adjusting the thickness of the substrate 2321.

Optionally, the screen assembly 20 further includes the transparent bonding layer 25, and the bonding layer 25 is bonded between the display panel 1 and the optical layer 23. In this embodiment, the bonding layer 25 is filled between the display panel 1 and the optical layer 23. The bonding layer 25 may bond the optical layer 23 to the display panel 1, and may also prevent the light from affecting the quality of the captured image due to scattering of the air layer. The bonding layer 25 may be made of a transparent optical adhesive. In an embodiment, the bonding layer 25 may also cover the package 24 at the same time.

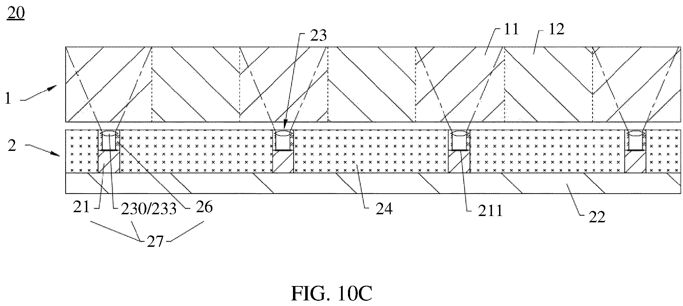

Refer to FIG. 10C. FIG. 10C is a schematic structural diagram of the screen assembly 20 shown in FIG. 9 in a third implementation.

In an optional embodiment, the optical layer 23 includes a plurality of lenses 233. The plurality of lenses 233 are disposed facing the photosensitive surfaces 211 of the plurality of image sensors 21 in a one-to-one correspondence. Each optical part 230 includes one lens 233 (corresponding to the solution in which a single sensor 21 includes one photosensitive surface 211) or a plurality of lenses 233 (corresponding to the solution in which a single sensor 21 includes a plurality of photosensitive surfaces 211). The lenses 233 are configured to image the user fingerprint images and scale down the user fingerprint images to the photosensitive surfaces 211 of the image sensors 21. The lenses 233 are configured for light concentration. The lenses 233 may be fastened to the corresponding image sensors 21 by using the package bodies 26, to form integrated and modular unit assemblies 27.

In this embodiment, the lenses 233 are configured to image the user fingerprint images and scale down the user fingerprint images to the photosensitive surfaces 211 of the image sensors 21. The ratio of the area of the captured image formed on the photosensitive surface 211 of the image sensor 21 to the area of the corresponding recognition region 11 is less than 1. In other words, the object image ratio is greater than 1. In this case, the area of the captured image is less than the area of the recognition region 11 on the display panel 1. Therefore, when the area of the recognition region 11 remains unchanged, the area of the photosensitive surface 211 of the image sensor 21 can be reduced, to reduce the costs of the image sensor 21 and the costs of the screen assembly 20. In addition, when the area of the photosensitive surface 211 of the image sensor 21 remains unchanged, the area of the recognition region 11 corresponding to the image sensor 21 increases, and the redundant splicing may be used to splice the plurality of recognition regions 11, to improve the fingerprint recognition accuracy of the electronic device 100.

A single lens 233 may include one or more sub-lenses. In this implementation, the single lens 233 includes one sub-lens. The sub-lens is a convex lens. In another implementation, the single lens 233 includes a plurality of sub-lenses. The plurality of sub-lenses may be a plurality of convex lenses, or a combination of a concave lens and a convex lens. In another implementation, the lenses 233 may alternatively be the planar lenses made by using the metamaterial structure.

The foregoing descriptions are merely specific implementations of this application, but are not intended to limit the protection scope of this application. Any variation or replacement readily figured out by a person skilled in the art within the technical scope disclosed in this application shall fall within the protection scope of this application. When no conflict occurs, the embodiments of this application and the features in the embodiments may be mutually combined. Therefore, the protection scope of this application shall be subject to the protection scope of the claims.

## Claims

1. A screen assembly (20),
wherein the screen assembly (20) comprises a display panel (1) and a recognition panel (2) disposed in a stack manner, wherein the display panel (1) has two sides, one being a light emitting side and one being a non-light emitting side, wherein the recognition panel (2) is located on the non-light-emitting side of the display panel (1),
wherein the display panel (1) comprises a plurality of recognition regions (11) and a plurality of non-recognition regions (12), wherein a non-recognition region (12) is formed between two adjacent and mutually spaced recognition regions (11);
wherein the recognition panel (2) comprises a plurality of image sensors (21) and photosensitive surfaces (211) of the plurality of image sensors (21) are configured to capture user fingerprint images located in the plurality of recognition regions (11) in a one-to-one correspondence, wherein each of the photosensitive surfaces (211) of the plurality of image sensors (21) faces each of the recognition regions (11) of the plurality of recognition regions (11) in a one-to-one correspondence, and a ratio of a total area of all the recognition regions (11) to a total area of all the non-recognition regions (12) in a fingerprint coverage region (3) is greater than or equal to 1:5;
wherein the screen assembly (20) comprises a touch layer which is configured to capture a touch location of a user and form touch information including location information of a finger of the user;
wherein a control module is configured to start only the photosensitive surfaces (211) of image sensors (21) that are corresponding to the fingerprint coverage region (3), wherein the fingerprint coverage region (3) is an area covered by a preset shape that uses a location of the finger of the user as a basis point;
wherein the recognition panel (2) further comprises a substrate (22) and an optical layer (23), the substrate (22) is located on the non-light-emitting side of the display panel (1), the plurality of image sensors (21) are fastened to a side, facing the display panel (1), of the substrate (22), the optical layer (23) is located between the plurality of image sensors (21) and the display panel (1), and the optical layer (23) is configured to image a user fingerprint image on a light-emitting side of the recognition region (11) to a photosensitive surface (211) of the corresponding image sensor.

2. The screen assembly (20) according to claim 1, wherein the ratio of the total area of all the recognition regions (11) to the total area of all the non-recognition regions (12) in the fingerprint coverage region (3) falls within a range of 1:2 to 2:1.

3. The screen assembly (20) according to claim 1, wherein the plurality of recognition regions (11) are arranged in a mutually spaced manner in a first direction.

4. The screen assembly (20) according to claim 3, wherein the plurality of recognition regions are arranged in a mutually spaced manner in a second direction, and the second direction is perpendicular to the first direction.

5. The screen assembly (20) according to claim 1, wherein the plurality of recognition regions (11) are arranged in rows and mutually spaced in a first direction, and are arranged in columns and mutually spaced in a second direction; the second direction is perpendicular to the first direction; and all the recognition regions (11) in two adjacent rows of the recognition regions are arranged in different columns.

6. The screen assembly (20) according to claim 5, wherein the ratio of the total area of all the recognition regions (11) to the total area of all the non-recognition regions (12) in the fingerprint coverage region (3) falls within a range of 1:0.8 to 1:1.2.

7. The screen assembly (20) according to claim 1, wherein the plurality of recognition regions (11) comprise a plurality of recognition region groups; each recognition region group comprises at least two recognition regions, of the recognition regions, that are next to each other; and any two adjacent recognition region groups of the recognition region groups are arranged in a mutually spaced manner.

8. The screen assembly (20) according to claim 1, wherein a single image sensor (21) comprises one photosensitive surface (211); or a single image sensor (21) comprises a plurality of photosensitive surfaces (211).

9. The screen assembly (20) according to claim 1, wherein the recognition panel further comprises a package, the package is located on the side, facing the display panel, of the substrate, and is disposed around the plurality of image sensors; and the optical layer covers the package and the plurality of image sensors.

10. The screen assembly (20) according to claim 1, wherein the optical layer comprises a plurality of optical parts, the plurality of optical parts are located on the plurality of image sensors (21) in a one-to-one correspondence, the recognition panel further comprises a package, and the package is located on the side, facing the display panel, of the substrate, and is disposed around the plurality of image sensors and the plurality of optical parts.

11. The screen assembly (20) according to claim 9 or 10, wherein the optical layer comprises a plurality of collimators, and the plurality of collimators are disposed facing the photosensitive surfaces of the plurality of image sensors in a one-to-one correspondence.

12. The screen assembly (20) according to claim 9 or 10, wherein the optical layer comprises a plurality of light transmission holes, the plurality of light transmission holes are disposed facing the photosensitive surfaces of the plurality of image sensors in a one-to-one correspondence, a first spacing is formed between a center of each light transmission hole and a light-emitting surface of the display panel, a second spacing is formed between the center of each light transmission hole and the photosensitive surface of the image sensor, and the first spacing is greater than the second spacing.

13. The screen assembly according to claim 12, wherein the screen assembly further comprises a transparent bonding layer, and the bonding layer is bonded between the display panel and the optical layer.

14. The screen assembly according to claim 9 or 10, wherein the optical layer comprises a plurality of lenses; the plurality of lenses are disposed facing the photosensitive surfaces of the plurality of image sensors in a one-to-one correspondence; and the lens is configured to image the user fingerprint image and scale down the user fingerprint image to the photosensitive surface of the image sensor.

15. An electronic device, comprising a housing and the screen assembly according to any one of claims 1 to 14, wherein the screen assembly is mounted on the housing.

## Patentansprüche

1. Bildschirmanordnung (20),
wobei die Bildschirmanordnung (20) ein Anzeigefeld (1) und ein Erkennungsfeld (2) umfasst, die stapelweise angeordnet sind, wobei das Anzeigefeld (1) zwei Seiten aufweist, wobei eine eine lichtemittierende Seite ist und eine eine nicht lichtemittierende Seite ist, wobei sich das Erkennungsfeld (2) auf der nicht lichtemittierenden Seite des Anzeigefeldes (1) befindet,
wobei das Anzeigefeld (1) eine Mehrzahl von Erkennungsbereichen (11) und eine Mehrzahl von Nicht-Erkennungsbereichen (12) umfasst, wobei ein Nicht-Erkennungsbereich (12) zwischen zwei benachbarten und voneinander beabstandeten Erkennungsbereichen (11) ausgebildet ist;
wobei das Erkennungsfeld (2) eine Mehrzahl von Bildsensoren (21) umfasst und lichtempfindliche Oberflächen (211) der Mehrzahl von Bildsensoren (21) dazu ausgelegt sind, Benutzerfingerabdruckbilder, die sich in der Mehrzahl von Erkennungsbereichen (11) befinden, in einer Eins-zu-eins-Entsprechung zu erfassen, wobei jede der lichtempfindlichen Oberflächen (211) der Mehrzahl von Bildsensoren (21) jedem der Erkennungsbereiche (11) der Mehrzahl von Erkennungsbereichen (11) in einer Eins-zu-eins-Entsprechung gegenüberliegt und ein Verhältnis der Gesamtfläche aller Erkennungsbereiche (11) zu einer Gesamtfläche aller Nicht-Erkennungsbereiche (12) in einem Fingerabdruckabdeckungsbereich (3) größer oder gleich 1:5 ist;
wobei die Bildschirmanordnung (20) eine Berührungsschicht umfasst, die dazu ausgelegt ist, eine Berührungsposition eines Benutzers zu erfassen und Berührungsinformationen zu erzeugen, die Positionsinformationen eines Fingers des Benutzers enthalten;
wobei ein Steuermodul dazu ausgelegt ist, nur die lichtempfindlichen Oberflächen (211) von Bildsensoren (21) zu aktivieren, die dem Fingerabdruckabdeckungsbereich (3) entsprechen,
wobei der Fingerabdruckabdeckungsbereich (3) eine Fläche ist, die durch eine voreingestellte Form abgedeckt ist, die eine Position des Fingers des Benutzers als Basispunkt verwendet;
wobei das Erkennungsfeld (2) ferner ein Substrat (22) und eine optische Schicht (23) umfasst, das Substrat (22) sich auf der nicht lichtemittierenden Seite des Anzeigefeldes (1) befindet, die Mehrzahl von Bildsensoren (21) an einer dem Anzeigefeld (1) gegenüberliegenden Seite des Substrats (22) befestigt ist, die optische Schicht (23) sich zwischen der Mehrzahl von Bildsensoren (21) und dem Anzeigefeld (1) befindet und die optische Schicht (23) dazu ausgelegt ist, ein Benutzerfingerabdruckbild auf einer lichtemittierenden Seite des Erkennungsbereichs (11) auf eine lichtempfindliche Oberfläche (211) des entsprechenden Bildsensors abzubilden.

2. Bildschirmanordnung (20) nach Anspruch 1, wobei das Verhältnis der Gesamtfläche aller Erkennungsbereiche (11) zu der Gesamtfläche aller Nicht-Erkennungsbereiche (12) in dem Fingerabdruckabdeckungsbereich (3) in einen Bereich von 1:2 bis 2:1 fällt.

3. Bildschirmanordnung (20) nach Anspruch 1, wobei die Mehrzahl von Erkennungsbereichen (11) in einer ersten Richtung in einer voneinander beabstandeten Weise angeordnet ist.

4. Bildschirmanordnung (20) nach Anspruch 3, wobei die Mehrzahl von Erkennungsbereichen in einer zweiten Richtung in einer voneinander beabstandeten Weise angeordnet ist und die zweite Richtung senkrecht zu der ersten Richtung ist.

5. Bildschirmanordnung (20) nach Anspruch 1, wobei die Mehrzahl von Erkennungsbereichen (11) in Zeilen und in einer ersten Richtung voneinander beabstandet angeordnet ist und in Spalten und in einer zweiten Richtung voneinander beabstandet angeordnet ist; wobei die zweite Richtung senkrecht zu der ersten Richtung ist und alle Erkennungsbereiche (11) in zwei benachbarten Zeilen der Erkennungsbereiche in verschiedenen Spalten angeordnet sind.

6. Bildschirmanordnung (20) nach Anspruch 5, wobei das Verhältnis der Gesamtfläche aller Erkennungsbereiche (11) zu der Gesamtfläche aller Nicht-Erkennungsbereiche (12) in dem Fingerabdruckabdeckungsbereich (3) in einen Bereich von 1:0,8 bis 1:1,2 fällt.

7. Bildschirmanordnung (20) nach Anspruch 1, wobei die Mehrzahl von Erkennungsbereichen (11) eine Mehrzahl von Erkennungsbereichsgruppen umfasst; wobei jede Erkennungsbereichsgruppe mindestens zwei Erkennungsbereiche der Erkennungsbereiche umfasst, die nebeneinander liegen, und zwei beliebige benachbarte Erkennungsbereichsgruppen der Erkennungsbereichsgruppen in einer voneinander beabstandeten Weise angeordnet sind.

8. Bildschirmanordnung (20) nach Anspruch 1, wobei ein einzelner Bildsensor (21) eine lichtempfindliche Oberfläche (211) umfasst oder ein einzelner Bildsensor (21) eine Mehrzahl von lichtempfindlichen Oberflächen (211) umfasst.

9. Bildschirmanordnung (20) nach Anspruch 1, wobei das Erkennungsfeld ferner eine Packung umfasst, die Packung sich auf der dem Anzeigefeld gegenüberliegenden Seite des Substrats befindet und um die Mehrzahl von Bildsensoren angeordnet ist und die optische Schicht die Packung und die Mehrzahl von Bildsensoren abdeckt.

10. Bildschirmanordnung (20) nach Anspruch 1, wobei die optische Schicht eine Mehrzahl von optischen Teilen umfasst, die Mehrzahl von optischen Teilen sich in einer Eins-zu-eins-Entsprechung auf der Mehrzahl von Bildsensoren (21) befindet, das Erkennungsfeld ferner eine Packung umfasst und die Packung sich auf einer dem Anzeigefeld gegenüberliegenden Seite des Substrats befindet und um die Mehrzahl von Bildsensoren und die Mehrzahl von optischen Teilen angeordnet ist.

11. Bildschirmanordnung (20) nach Anspruch 9 oder 10, wobei die optische Schicht eine Mehrzahl von Kollimatoren umfasst und die Mehrzahl von Kollimatoren in einer Eins-zu-eines-Entsprechung gegenüber den lichtempfindlichen Oberflächen der Mehrzahl von Bildsensoren angeordnet ist.

12. Bildschirmanordnung (20) nach Anspruch 9 oder 10, wobei die optische Schicht eine Mehrzahl von Lichtdurchlässigkeitslöchern umfasst, die Mehrzahl von Lichtdurchlässigkeitslöchern in einer Eins-zu-eins-Entsprechung gegenüber den lichtempfindlichen Oberflächen der Mehrzahl von Bildsensoren angeordnet ist, ein erster Abstand zwischen einer Mitte jedes Lichtdurchlässigkeitslochs und einer lichtemittierenden Oberfläche des Anzeigefeldes erzeugt wird, ein zweiter Abstand zwischen der Mitte jedes Lichtdurchlässigkeitslochs und der lichtempfindlichen Oberfläche des Bildsensors erzeugt wird und der erste Abstand größer als der zweite Abstand ist.

13. Bildschirmanordnung nach Anspruch 12, wobei die Bildschirmanordnung ferner eine transparente Bondschicht umfasst und die Bondschicht zwischen das Anzeigefeld und die optische Schicht gebondet ist.

14. Bildschirmanordnung nach Anspruch 9 oder 10, wobei die optische Schicht eine Mehrzahl von Linsen umfasst; wobei die Mehrzahl von Linsen in einer Eins-zu-eins-Entsprechung gegenüber den lichtempfindlichen Oberflächen der Mehrzahl von Bildsensoren angeordnet ist und die Linsen dazu ausgelegt sind, das Benutzerfingerabdruckbild abzubilden und das Benutzerfingerabdruckbild auf die lichtempfindliche Oberfläche des Bildsensors zu verkleinern.

15. Elektronische Vorrichtung, umfassend ein Gehäuse und die Bildschirmanordnung nach einem der Ansprüche 1 bis 14, wobei die Bildschirmanordnung auf dem Gehäuse montiert ist.

## Revendications

1. Ensemble écran (20),
dans lequel l'ensemble écran (20) comprend un panneau d'affichage (1) et un panneau de reconnaissance (2) disposés à la manière d'un empilement, dans lequel le panneau d'affichage (1) a deux côtés, l'un étant un côté émetteur de lumière et l'un étant un côté non émetteur de lumière, dans lequel le panneau de reconnaissance (2) est situé sur le côté non émetteur de lumière du panneau d'affichage (1),
dans lequel le panneau d'affichage (1) comprend une pluralité de régions de reconnaissance (11) et une pluralité de régions de non-reconnaissance (12), dans lequel une région de non-reconnaissance (12) est formée entre deux régions de reconnaissance adjacentes et mutuellement espacées (11) ;
dans lequel le panneau de reconnaissance (2) comprend une pluralité de capteurs d'image (21) et des surfaces photosensibles (211) de la pluralité de capteurs d'image (21) sont configurées pour capturer des images d'empreinte digitale d'utilisateur situées dans la pluralité de régions de reconnaissance (11) dans une correspondance une-à-une, dans lequel chacune des surfaces photosensibles (211) de la pluralité de capteurs d'image (21) fait face à chacune des régions de reconnaissance (11) de la pluralité de régions de reconnaissance (11) dans une correspondance une-à-une, et un rapport d'une superficie totale de toutes les régions de reconnaissance (11) par rapport à une superficie totale de toutes les régions de non-reconnaissance (12) dans une région de couverture d'empreinte digitale (3) est supérieur ou égal à 1 : 5 ;
dans lequel l'ensemble écran (20) comprend une couche tactile qui est configurée pour capturer un emplacement de toucher d'un utilisateur et former des informations de toucher incluant des information d'emplacement d'un doigt de l'utilisateur ;
dans lequel un module de commande est configuré pour allumer seulement les surfaces photosensibles (211) de capteurs d'image (21) qui correspondent à la région de couverture d'empreinte digitale (3),
dans lequel la région de couverture d'empreinte digitale (3) est une superficie couverte par une forme prédéfinie qui utilise un emplacement du doigt de l'utilisateur en tant que point de base ;
dans lequel le panneau de reconnaissance (2) comprend en outre un substrat (22) et une couche optique (23), le substrat (22) est situé sur le côté non émetteur de lumière du panneau d'affichage (1), la pluralité de capteurs d'image (21) sont fixés à un côté, faisant face au panneau d'affichage (1), du substrat (22), la couche optique (23) est située entre la pluralité de capteurs d'image (21) et le panneau d'affichage (1), et la couche optique (23) est configurée pour imager une image d'empreinte digitale d'utilisateur sur un côté émetteur de lumière de la région de reconnaissance (11) vers une surface photosensible (211) du capteur d'image correspondant.

2. Ensemble écran (20) selon la revendication 1, dans lequel le rapport de la superficie totale de toutes les régions de reconnaissance (11) par rapport à la superficie totale de toutes les régions de non-reconnaissance (12) dans la région de couverture d'empreinte digitale (3) est dans les limites d'une plage de 1 : 2 à 2 : 1.

3. Ensemble écran (20) selon la revendication 1, dans lequel la pluralité de régions de reconnaissance (11) sont agencées de manière mutuellement espacée dans une première direction.

4. Ensemble écran (20) selon la revendication 3, dans lequel la pluralité de régions de reconnaissance sont agencées de manière mutuellement espacée dans une seconde direction, et la seconde direction est perpendiculaire à la première direction.

5. Ensemble écran (20) selon la revendication 1, dans lequel la pluralité de régions de reconnaissance (11) sont agencées en rangées et mutuellement espacées dans une première direction, et sont agencées en colonnes et mutuellement espacées dans une seconde direction ; la seconde direction est perpendiculaire à la première direction ; et toutes les régions de reconnaissance (11) dans deux rangées adjacentes des régions de reconnaissance sont agencées dans différentes colonnes.

6. Ensemble écran (20) selon la revendication 5, dans lequel le rapport de la superficie totale de toutes les régions de reconnaissance (11) par rapport à la superficie totale de toutes les régions de non-reconnaissance (12) dans la région de couverture d'empreinte digitale (3) est dans les limites d'une plage de 1 : 0,8 à 1 : 1,2.

7. Ensemble écran (20) selon la revendication 1, dans lequel la pluralité de régions de reconnaissance (11) comprennent une pluralité de groupes de régions de reconnaissance ; chaque groupe de régions de reconnaissance comprend au moins deux régions de reconnaissance, des régions de reconnaissance, qui sont l'une à côté de l'autre ; et deux groupes de régions de reconnaissance adjacents quelconques des groupes de régions de reconnaissance sont agencés de manière mutuellement espacée.

8. Ensemble écran (20) selon la revendication 1, dans lequel un seul capteur d'image (21) comprend une surface photosensible (211) ; ou un seul capteur d'image (21) comprend une pluralité de surfaces photosensibles (211).

9. Ensemble écran (20) selon la revendication 1, dans lequel le panneau de reconnaissance comprend en outre un boîtier, le boîtier est situé sur le côté, faisant face au panneau d'affichage, du substrat, et est disposé autour de la pluralité de capteurs d'image ; et la couche optique couvre le boîtier et la pluralité de capteurs d'image.

10. Ensemble écran (20) selon la revendication 1, dans lequel la couche optique comprend une pluralité de parties optiques, la pluralité de parties optiques sont situées sur la pluralité de capteurs d'image (21) dans une correspondance une-à-une, le panneau de reconnaissance comprend en outre un boîtier, et le boîtier est situé sur le côté, faisant face au panneau d'affichage, du substrat, et est disposé autour de la pluralité de capteurs d'image et la pluralité de parties optiques.

11. Ensemble écran (20) selon la revendication 9 ou 10, dans lequel la couche optique comprend une pluralité de collimateurs, et la pluralité de collimateurs sont disposées en face des surfaces photosensibles de la pluralité de capteurs d'image dans une correspondance une-à-une.

12. Ensemble écran (20) selon la revendication 9 ou 10, dans lequel la couche optique comprend une pluralité de trous de transmission de lumière, la pluralité de trous de transmission de lumière sont disposés en face des surfaces photosensibles de la pluralité de capteurs d'image dans une correspondance une-à-une, un premier espacement est formé entre un centre de chaque trou de transmission de lumière et une surface émettrice de lumière du panneau d'affichage, un second espacement est formé entre le centre de chaque trou de transmission de lumière et la surface photosensible du capteur d'image, et le premier espacement est plus grand que le second espacement.

13. Ensemble écran selon la revendication 12, dans lequel l'ensemble écran comprend en outre une couche de liage transparente, et la couche de liage est liée entre le panneau d'affichage et la couche optique.

14. Ensemble écran selon la revendication 9 ou 10, dans lequel la couche optique comprend une pluralité de lentilles ; la pluralité de lentilles sont disposées en face des surfaces photosensibles de la pluralité de capteurs d'image dans une correspondance une-à-une ; et la lentille est configurée pour imager l'image d'empreinte digitale d'utilisateur et réduire l'image d'empreinte digitale d'utilisateur vers la surface photosensible du capteur d'image.

15. Dispositif électronique, comprenant un logement et l'ensemble écran selon l'une quelconque des revendications 1 à 14, dans lequel l'ensemble écran est monté sur le logement.
